# EUROPÄISCHE PATENTANMELDUNG

(11) **EP 4 844 243 A2**
(43) Veröffentlichungstag der Anmeldung: **25.11.2026**
(21) Anmeldenummer: 26204756.6
(22) Anmeldetag: 17.05.2019
(51) Int. Cl.: F16H 49/00

(54) **GETRIEBE MIT ZUGMITTEL**

(30) Priorität: 31.05.2018 WO PCT/IB2018/053897
(62) Dokumentnummer(n) der früheren Anmeldung(en) nach Art. 76 EPÜ: 23179082.5 / 4 234 973; 19735628.0 / 3 803 153
(71) Anmelder: TQ-Systems GmbH, 82229 Seefeld (DE)
(72) Erfinder: ROSSBERGER, Antonius Georg, 82229 Seefeld (DE)
(74) Vertreter: Schweiger, Martin

(57) **Zusammenfassung**

Zahnriemen mit einer Innenverzahnung und einer Außenverzahnung und Getriebe mit einem solchen Zahnriemen. Zahnköpfe der Innenverzahnung weisen einen abgerundeten Bereich mit einem kreisabschnittsförmigen Querschnitt auf und Zahnköpfe der Außenverzahnung weisen einen abgerundeten Bereich mit einem kreisabschnittsförmigen Querschnitt auf. Ein Bereich zwischen zwei benachbarten Zahnköpfen der Innenverzahnung ist mindestens so breit wie eine Zahnbreite von Zähnen der Innenverzahnung, und ein Bereich zwischen zwei benachbarten Zahnköpfen der Außenverzahnung ist mindestens so breit wie eine Zahnbreite von Zähnen der Außenverzahnung.

## Beschreibung

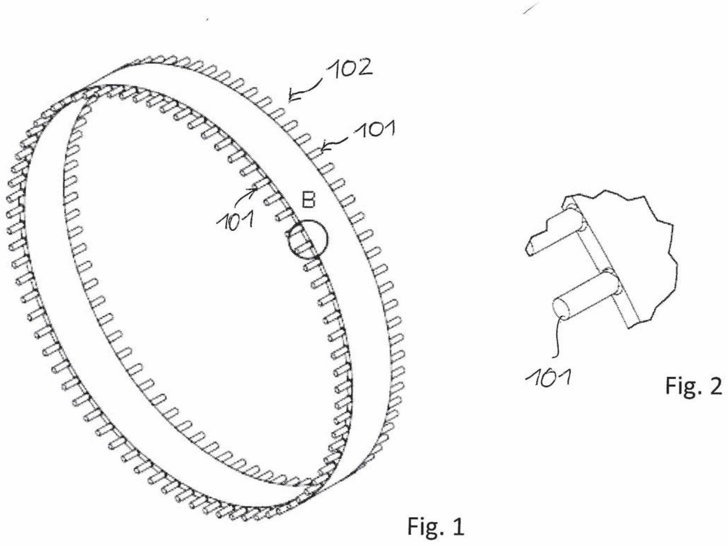

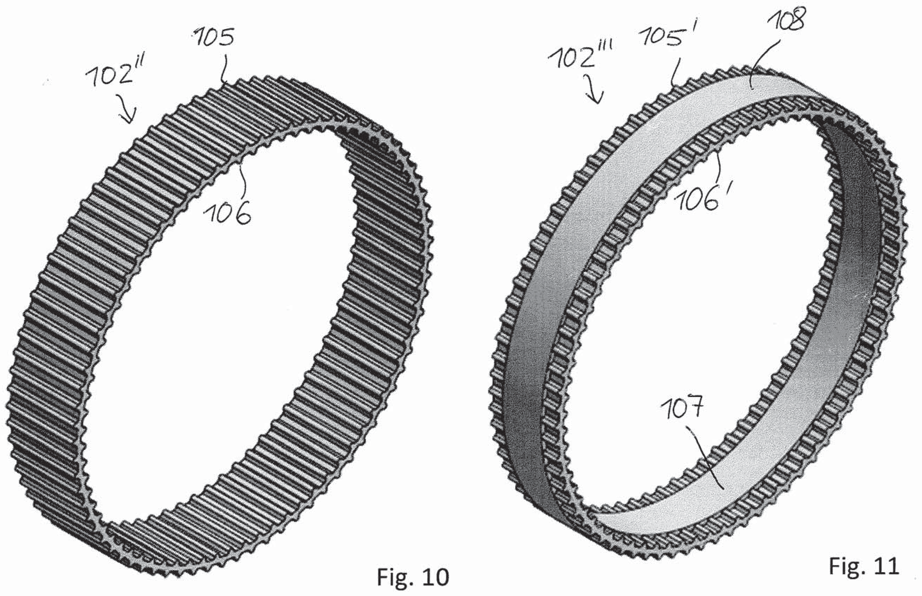

Hiermit wird der Gegenstand der Patentanmeldung PCT/IB2017/057452 per Rückbezug mit in die vorliegende Beschreibung aufgenommen, und zwar insbesondere unter Rückbezug auf die Figuren 1 bis 9, und den zugehörigen Text auf Seite 28, Zeile 11 bis Seite 34, Zeile 14 der Beschreibung, die sich aufn ein Harmonic Pin-Ring Getriebe beziehen, die Figur 10, die sich auf ein Lagerungskonzept für das Getriebe der Figuren 1 bis 9 bezieht,
die Figuren 11 bis 14 und 20 und den zugehörigen Text auf Seiten 36 Zeile 14 bis Seite 40, Zeile 21 und Seite 41, Zeile bis Seite 42, Zeile 30 der Beschreibung, die sich auf ein Harmonic Pinring-Getriebe mit Exzenterscheibe beziehen,
die Figuren 15 bis 19 und den zugehörigen Text auf Seite 40, Zeile 32 bis Seite 41, Zeile 35, die sich auf ein Pinring für das Getriebe der Figuren 11 bis 14 beziehen,
die Figuren 21 - 29 und den zugehörigen Text auf Seite 48 Zeile 8 bis Seite 50, Zeile 24, die Figuren 30, 31 und den zugehörigen Text auf Seite 50, Zeile 62 bis Seite 53, Zeile 10, die sich auf eine Kraftmessdose beziehen,
die Figuren 43 und 44, die sich auf ein HPD-Getriebe mit Kraftmessdose, und den zugehörigen Text auf Seite 57, Zeile 36 bis Seite 58, Zeile 38, die Figuren 32 und 34, und den zugehörigen Text auf Seite 55, Zeile 8 bis Seite 56, Zeile 9, die sich auf ein Befestigungs- und Lagerungskonzept für die Kraftmessdose beziehen,
die Figuren 35 bis 40 und den zugehörigen Text auf Seite 56, Zeile 11 bis Seite 57, Zeile 35, sowie die Figuren 41 und 42 und den zugehörigen Text auf Seite 57, Zeile 30 bis 35, die sich auf eine indirekte Messung eines Tretwellen-Drehmoments mit Dehnmessstreifen beziehen,
die Figuren 45 bis 59 und den zugehörigen Text auf Seite 59, Zeile 1 bis S. 63, Zeile 26, die sich auf eine Freilaufbaugruppe beziehen und Fig. 60 und den zugehörigen Text auf S. 63, Zeile 28 bis Zeile 34, die sich auf ein Harmonic Pinring-Getriebe mit Klemmrollenfreilauf bezieht,
die Figuren 61 - 66 und den zugehörigen Text auf Seite 64, Zeile 1 bis Seite 67, Zeile 27, die sich auf einen Getriebemotor beziehen,
die Figuren 67 bis 76 und den zugehörigen Text auf Seite 67, Zeile 29 bis Seite 69, Zeile 31, die sich auf ein Harmonic Pinring-Getriebe Getriebe mit einem Planetengetriebe als Kurbelgetriebe beziehen,
die Figuren 77 bis 81, und den zugehörigen Text auf Seite 69, Zeile 33 bis Seite 73, Zeile 21, die sich auf ein Zykloidgetriebe beziehen,
die Figuren 82 bis 88, und den zugehörigen Text auf Seite 73, Zeile 23 bis Seite 75, Zeile 16, die sich auf ein Spannwellengetriebe beziehen,
die Figuren 89 - 93 und den zugehörigen Text auf Seite 76, Zeile 23 bis Seite 78, Zeile 24 die sich auf einen zweigeteilten Pinring und ein hochuntersetzendes Getriebe mit dem zweigeteilten Pinring beziehen,
die Figuren 94 - 118, und den zugehörigen Text auf Seite 78, Zeile 26 bis Seite 105, Zeile 4, die sich auf Verzahnungsgeometrien und insbesondere eine Ein-Epizykel-Geometrie und eine Zwei-Epizykel-Geometrie beziehen,
die generischen Figuren 119 bis 123 und den zugehörigen Text auf Seite 105, Zeile 34 bis Seite 107, Zeile 12, die sich auf die Getriebe der vorliegenden Beschreibung beziehen,
die Figuren 124 - 126 und den zugehörigen Text auf Seite 107, Zeile 14 bis Seite 107, Zeile 21, die sich wie auch die weiter oben genannten Figuren 82 bis 88 auf ein Spannwellengetriebe beziehen, sowie den weiteren Text der Beschreibung der PCT/IB2017/057452, der sich auf die oben genannten Ausführungsbeispiele bezieht.

Folgende Begriffe der vorliegenden Beschreibung entsprechen den nachfolgend aufgeführten Begriffen in der Beschreibung der PCT/IB2017/057452.

Ein zentraler Auflagebereich an der Innenseite eines Zahnriemens entspricht der "innere Auflagefläche" eines Pinrings, insbesondere eines einstückigen Pinrings, und ein zentraler Auflagebereich an der Außenseite eines Zahnriemens entspricht einer "äußere Auflagefläche" eines Pinrings, insbesondere eines einstückigen Pinrings.

Eine "Rotor-Transmitter-Einheit" entspricht einer inneren Rotorwelle 27 und einer Kurvenscheibe 28 oder einer inneren Rotorwelle 27 und einer Exzenterscheibe 28', eine "Innenrad-Abtriebswellen-Einheit" entspricht einem Innenrad 7 mit einem Hohlwellenbereich 234. Eine "Außenrad-Baugruppe" entspricht einem Stützring 36 mit einem daran befestigten bzw. darin eingesetzten ersten Außenrad 8 und einem daran befestigten bzw. darin eingesetzten zweiten Außenrad 8'.

Einer "Ein-Epizykel-Verzahnung" entspricht eine auf einer Radkurve mit einem Epizykel basierende Verzahnung, wie sie beispielsweise auch in Aufzählungspunkt 1 der ersten Auflistung am Ende der vorliegenden Beschreibung definiert wird. Eine "Zwei-Epizykel-Verzahnung" entspricht eine auf einer Epizykel-Radkurve mit zwei Epizykeln basierende Verzahnung, wie sie beispielsweise auch in den Aufzählungspunkten 12 oder 13 der ersten Auflistung am Ende der vorliegenden Beschreibung definiert wird.

Die vorliegende Beschreibung offenbart einen Zahnriemen mit einer Innenverzahnung und einer Außenverzahnung, wobei Zahnköpfe der Innenverzahnung einen abgerundeten Bereich mit einem kreisabschnittsförmigen Querschnitt aufweisen. Zahnköpfe der Außenverzahnung weisen einen abgerundeten Bereich mit einem kreisabschnittsförmigen Querschnitt auf. Ein Bereich zwischen zwei benachbarten Zahnköpfen der Innenverzahnung ist mindestens so breit wie eine Zahnbreite von Zähnen der Innenverzahnung ist, und ein Bereich zwischen zwei benachbarten Zahnköpfen der Außenverzahnung ist mindestens so breit wie eine Zahnbreite von Zähnen der Außenverzahnung ist.

Insbesondere kann der Bereich zwischen den Zahnköpfen mindestens so breit sein wie eine Breite der Zahnköpfe der jeweiligen Verzahnung plus einer Breite, die durch die Form einer zu der jeweiligen Verzahnung des Zahnrings passende Verzahnung eines Außenrads oder eines Innenrads eines Getriebes bestimmt wird.

Insbesondere können Zahnköpfe der Innenverzahnung gemäß einer symmetrischen Anordnung radial gegenüber den Zahnköpfen der Außenverzahnung angeordnet sein. Alternative können Zahnköpfe der Innenverzahnung in einer versetzten Anordnung radial gegenüber von Zahngründen der Außenverzahnung angeordnet sein.

Weiterhin können Zahngründe der Innverzahnung als flache Zahngründe geformt sein, die einem Abschnitt eines senkrechten Kreiszylinders entsprechen. Diese Formgebung erlaubt eine einfache Herstellung, beispielsweise durch Ausformung aus einem zylindrischen Werkstück und ist bei geeignet ausgebildeter Gegenverzahnung eines Innen- oder eines Außenrads, das in den Zahnriemen eingreift ausreichen, um einen guten bis sehr guten Eingriff des Zahnriemens zu erreichen.

Gemäß einer weiteren Ausführungsform hat der Zahnriemen die Form eines in Form eines senkrechen Kreiszylinders ausgebildeten Wellblechs, das eine gleichbleibende Dicke aufweist, wobei die Innenverzahnung durch eine Rückseite der Außenverzahnung gebildet wird, und wobei die Außenverzahnung durch eine Rückseite der Innenverzahnung gebildet wird.

Gemäß einer weiteren Ausführungsform weist eine Innenseite des Zahnriemens einen glatten, zentralen Auflagebereich auf, der in Form eines senkrechten Kreiszylinders ausgebildet ist, so dass sich die Innenverzahnung an axial gegenüberliegenden Bereichen an den zentralen Auflagebereich anschließt. Hierbei ist glatt im Vergleich zu einer ohne Hilfsmittel beobachtbaren Skala gemeint und nicht etwa auf einer mikroskopischen Skala.

Des Weiteren kann eine Außenseite des Zahnriemens einen zentralen Auflagebereich aufweisen, der in Form eines senkrechten Kreiszylinders ausgebildet ist, so dass sich die Außenverzahnung an axial gegenüberliegenden Bereichen an den zentralen Auflagebereich anschließt.

Insbesondere kann wobei der Zahnriemen aus einem Stück gefertigt sein, beispielsweise gegossen, gefräst, oder gestanzt, was eine effiziente Fertigung und eine gute Stabilität erlaubt.

Gemäß einer Ausführungsform weist der Zahnriemen Kunststoff aufweist, wobei er zu über 90 Gewichtsprozent Kunststoff aufweisen kann oder auch vollständig aus Kunststoff gefertigt sein kann.

Gemäß einer weiteren Ausführungsform weist der Zahnriemen eine Stahllegierung auf, wobei er insbesondere zu über 90 Gewichtsprozent Stahllegierung aufweisen kann oder auch vollständig aus einer Stahllegierung gefertigt sein kann.

Insbesondere kann wobei der Zahnriemen eine Stahl-Cobalt-Mangan Legierung aufweist, zu über 90 Gewichtsprozent aus eine Stahl-Cobalt-Mangan Legierung aufweisen, oder vollständig aus einer Stahl-Cobalt-Mangan Legierung gefertigt sein.

Weiterhin offenbart die vorliegende Beschreibung ein Getriebe mit einer Eingangswelle und mit einer Ausgangswelle, mit einem Außenrad und einem konzentrisch zum Außenrad im Inneren des Außenrads angeordnetes Innenrad sowie mit einem sich zwischen Außenrad und Innenrad erstreckendes Zugmittel.

Das Getriebe weist wenigstens einen umlaufenden Transmitter auf, der das Zugmittel vom äußeren Umfang des Innenrads abhebt und an den inneren Umfang des Außenrads drückt. Dabei ist das Zugmittel als der Zahnriemen gemäß der obigen Beschreibung ausgebildet.

Bei dem Getriebe kann insbesondere die Eingangswelle mit dem Transmitter, mit dem Außenrad oder mit dem Innenrad verbunden sein, und die Ausgangswelle kann mit dem Transmitter, mit dem Außenrad oder mit dem Innenrad verbunden sein, insoweit die Eingangswelle nicht bereits damit verbunden ist.

Des Weiteren offenbart die vorliegende Beschreibung ein Getriebe nach einem der Aufzählungspunkte 1, 15, 34, 37, 46, 52, 57 oder 59 der zweiten Aufzählung der vorliegenden Beschreibung, wobei das Zugmittel als der oben genannte Zahnriemen ausgebildet ist.

Weiterhin offenbart die vorliegende Beschreibung ein Harmonisches Pinring Getriebe nach Aufzählungspunkt 1 der ersten Aufzählung der vorliegenden Beschreibung, wobei der Pinring als der oben genannte Zahnriemen ausgebildet ist.

Weiterhin offenbart die vorliegende Beschreibung ein Harmonisches Pinring Getriebe nach Aufzählungspunkt 14 der ersten Aufzählung der vorliegenden Beschreibung, wobei der Pinring als der oben genannte Zahnriemen ausgebildet ist.

Insbesondere kann ein Elektromotor vorgesehen sein, dessen Rotor mit der Eingangswelle des Getriebes verbunden ist. Alternativ kann auch ein Verbrennungsmotor vorgesehen sein, wobei eine Ausgangswelle des Verbrennungsmotors mit der Eingangswelle des Getriebes verbunden ist.

Weiterhin offenbart die vorliegende Beschreibung ein Fahrzeug, insbesondere Zweirad oder Dreirad, mit der oben genannten einer Motor-Getriebe-Einheit, wobei wenigstens ein Laufrad des Fahrzeugs mit der Ausgangswelle des Getriebes verbunden ist.

Weiterhin offenbart die vorliegende Beschreibung einen Stromerzeuger mit einer Antriebseinheit, mit einer Generatoreinheit zum Erzeugen von Strom und mit einem oben genannten Getriebe, wobei eine Eingangswelle des Getriebes mit der Antriebseinheit verbunden ist und wobei eine Ausgangswelle des Getriebes mit einer Eingangswelle des Generators verbunden ist.

Der Gegenstand der vorliegenden Beschreibung wird im Folgenden unter Bezugnahme auf die folgenden Figuren beschrieben.
- Figur 1: zeigt eine perspektivische Ansicht einer ersten Ausführungsform eines Pinrings mit Lücken-Anordnung der Pins,
- Figur 2: zeigt eine Ausschnittsvergrößerung des Pinrings von Fig. 1,

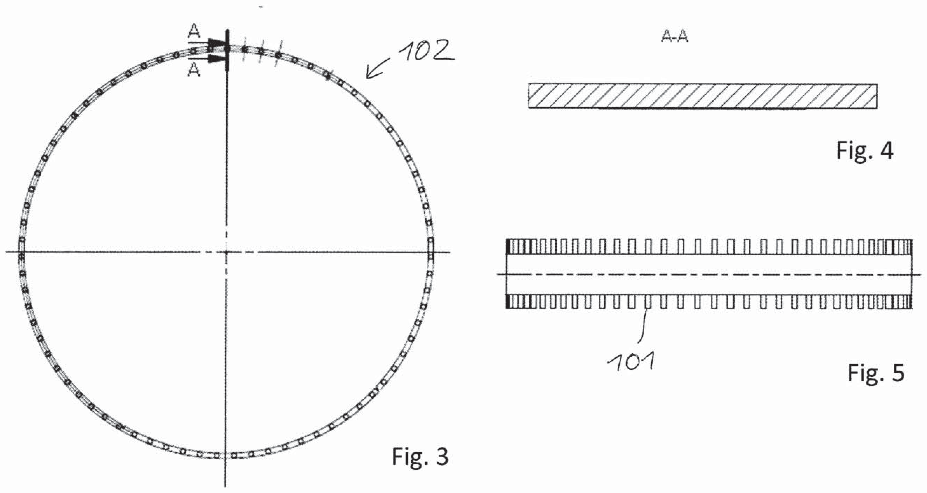

- Figur 3: zeigt eine Seitenansicht des Pinrings von Fig. 1,
- Figur 4: zeigt einen Querschnitt des Pinrings entlang der Querschnittline A-A von Fig. 3,
- Figur 5: zeigt eine Frontalansicht des Pinrings von Fig. 1,

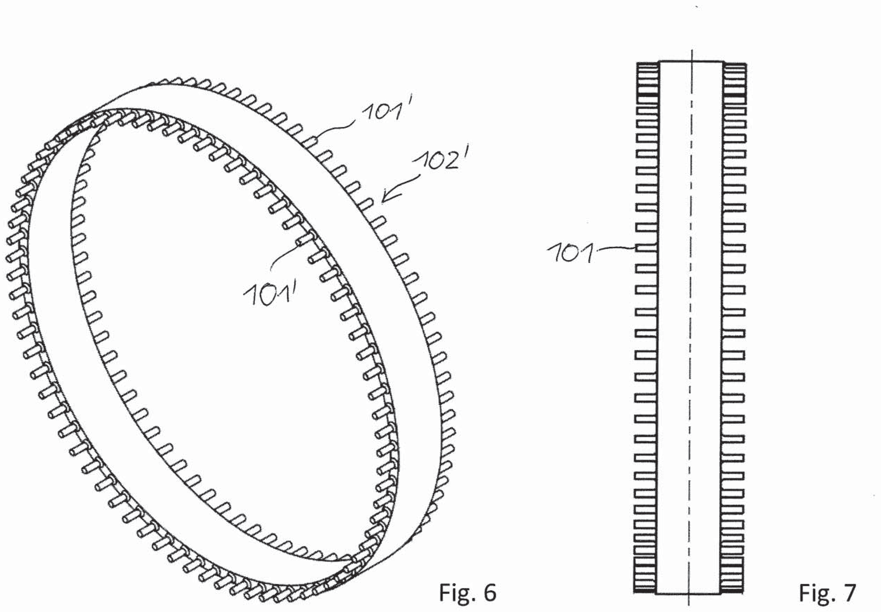

- Figur 6: zeigt eine perspektivische Ansicht einer zweiten Ausführungsform eines Pinrings mit Lücken-Anordnung der Pins,
- Figur 7: zeigt eine Frontalansicht des Pinrings von Fig. 6,

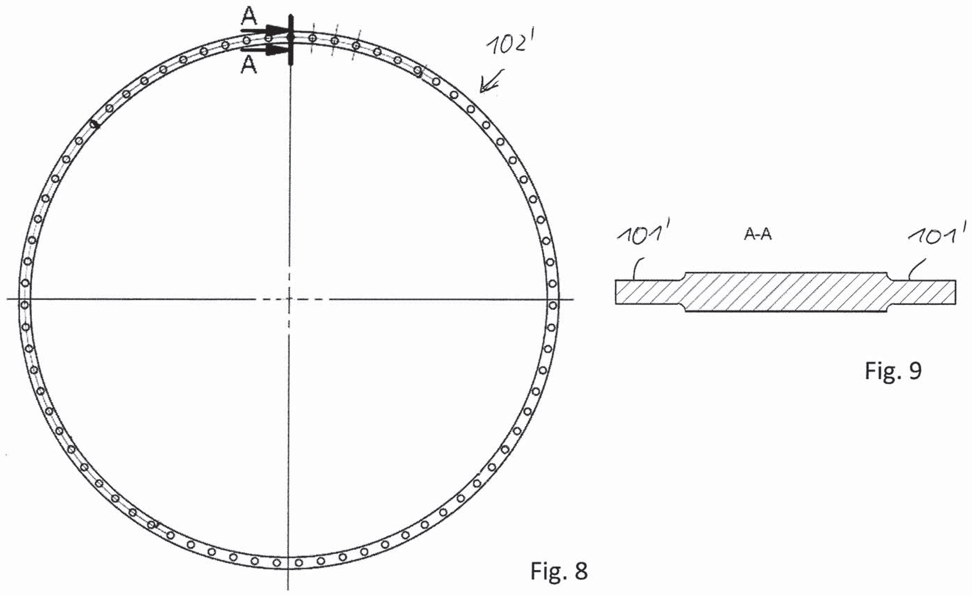

- Figur 8: zeigt eine Seitenansicht des Pinrings von Fig. 6,
- Figur 9: zeigt eine Querschnittsansicht des Pinrings von Fig. 6 entlang der Schnittline A-A von Fig. 8,
- Figur 10: zeigt eine perspektivische Ansicht eines Pinrings bzw. Zahnriemens mit versetzter Lücken-Anordnung, wobei die Pins bzw. Zähne der Innen- und Außenverzahnungen gegeneinander versetzt sind,
- Figur 11: zeigt eine perspektivische Ansicht eines weiteren Pinrings mit versetzter Lücken-Anordnung mit einem zentralen Auflagebereich an Innen- und Außenseite,

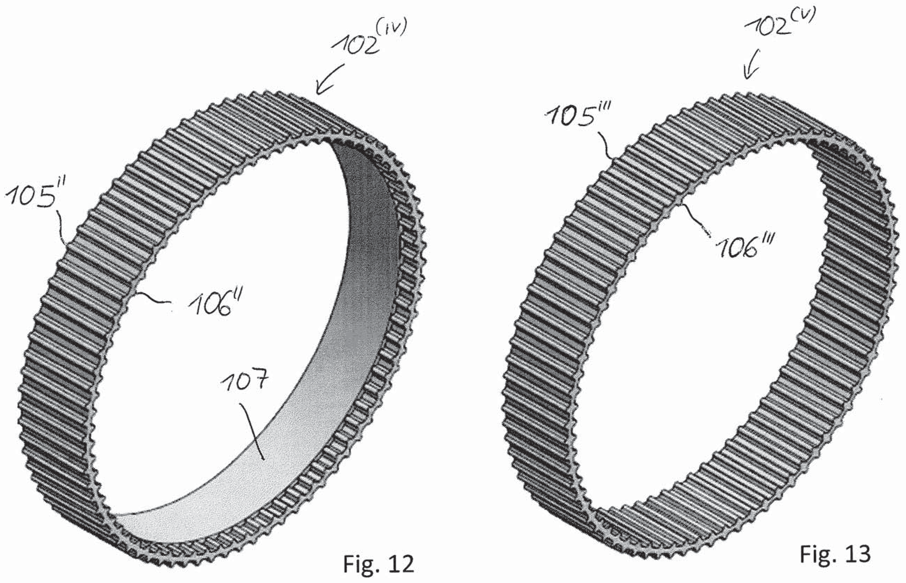

- Figur 12: zeigt eine perspektivische Ansicht eines weiteren Pinrings mit versetzter Lücken-Anordnung mit einem zentralen Auflagebereich an der Innenseite,
- Figur 13: zeigt eine perspektivische Ansicht eines weiteren Pinrings mit symmetrischer Lücken-Anordnung, bei dem die Zähne bzw. Pins der Innen- und Außenverzahnung einander gegenüberliegen,

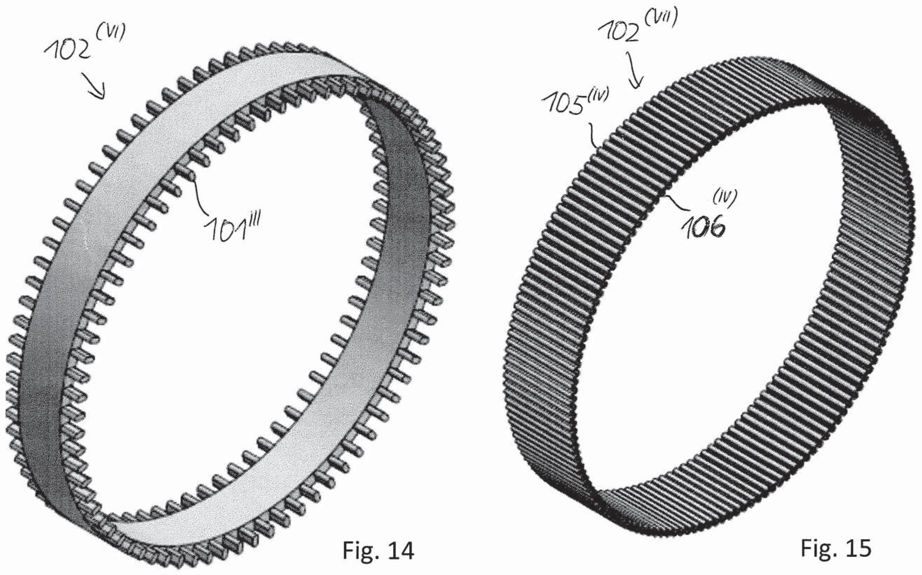

- Figur 14: zeigt eine perspektivische Ansicht eines weiteren Pinrings mit symmetrischer Lücken-Anordnung, bei dem zwischen den Pins radiale Zwischenräume angeordnet sind,
- Figur 15: zeigt eine perspektivische Ansicht eines weiteren Pinrings bzw. Zahnriemens mit bei dem die Zahngründe jeweils die Zahnköpfe der radial gegenüberliegenden Verzahnung bilden,

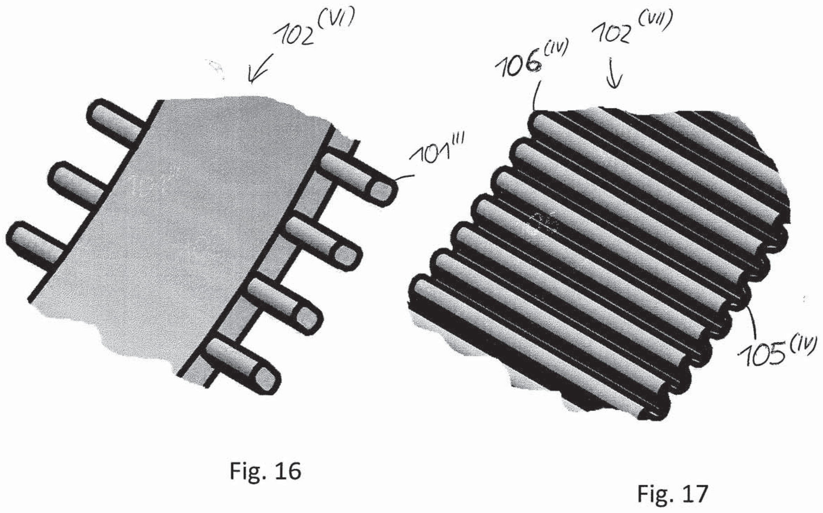

- Figur 16: zeigt eine Ausschnittvergrößerung von Fig. 14,
- Figur 17: zeigt eine Ausschnittvergrößerung von Fig. 15,

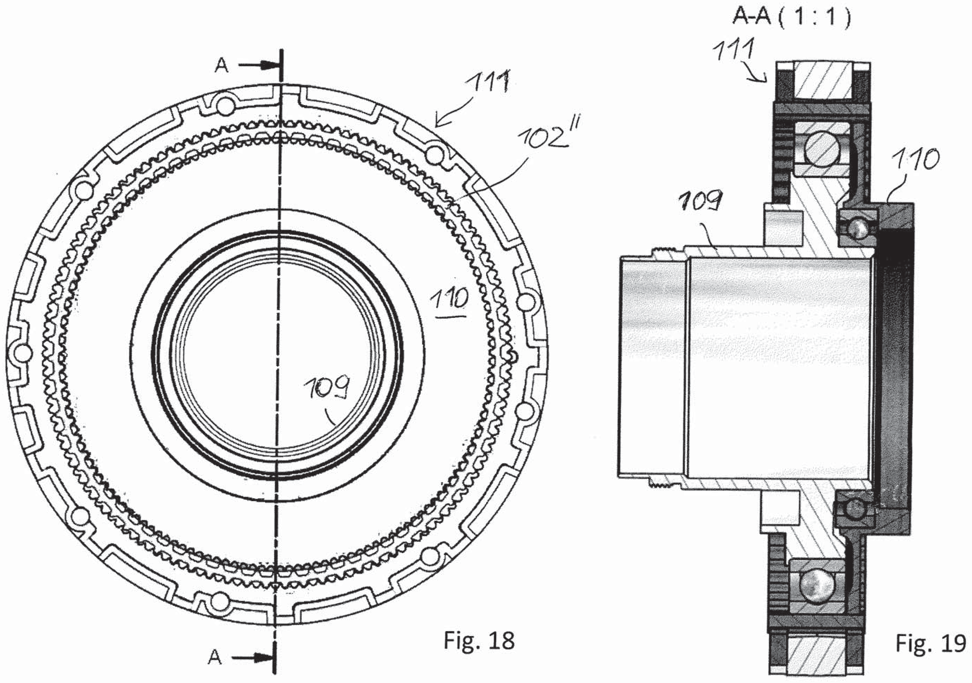

- Figur 18: zeigt eine abtriebsseitige Frontalansicht eines Harmonic-Pinring-Getriebes,
- Figur 19: zeigt einen Querschnitt entlang der Schnittlinie A-A von Fig. 18,

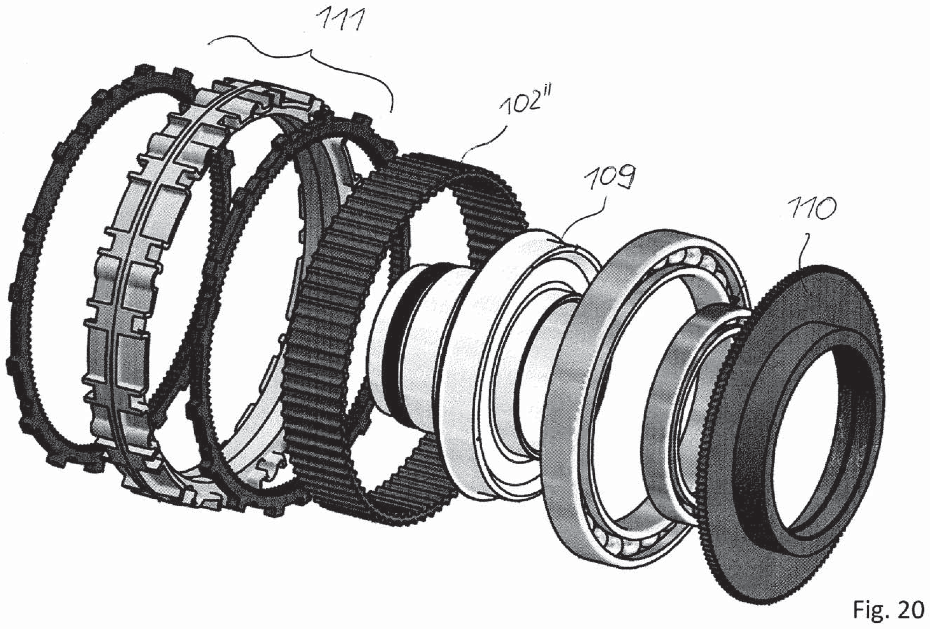

- Figur 20: zeigt eine Explosionsansicht des Getriebes von Figur 18,

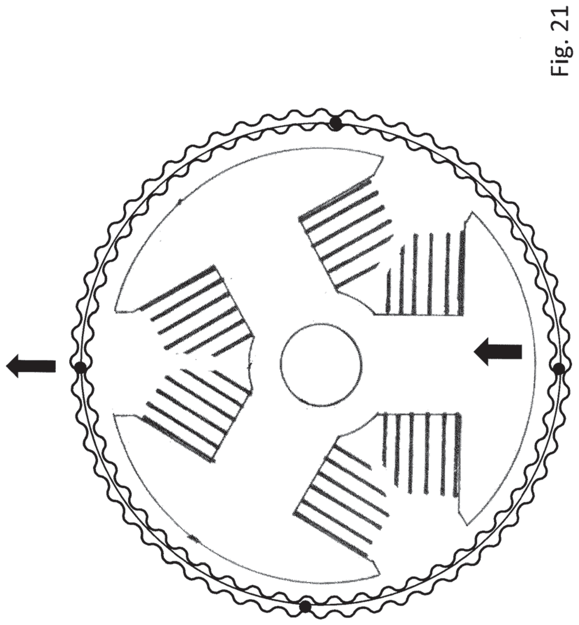

- Figur 21: zeigt ein Getriebe mit einem dreipoligen Stator, der einen Pinring durch elektromagnetische Kräfte verschiebt,

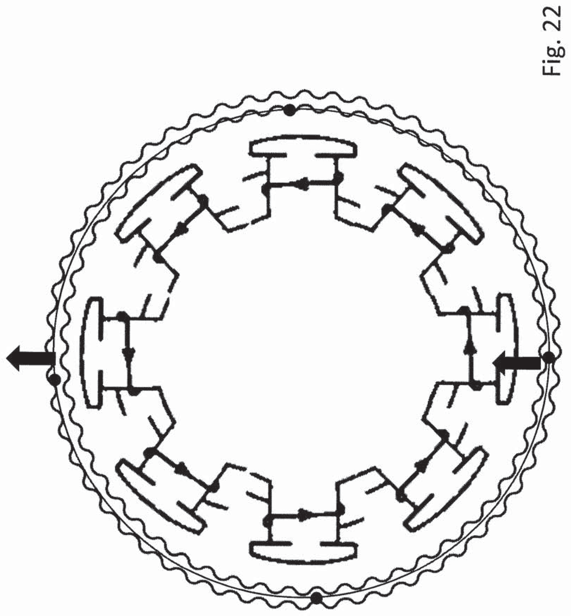

- Figur 22: zeigt ein Getriebe mit einem sechspoligen Stator, der einen Pinring durch elektromagnetische Kräfte verschiebt,

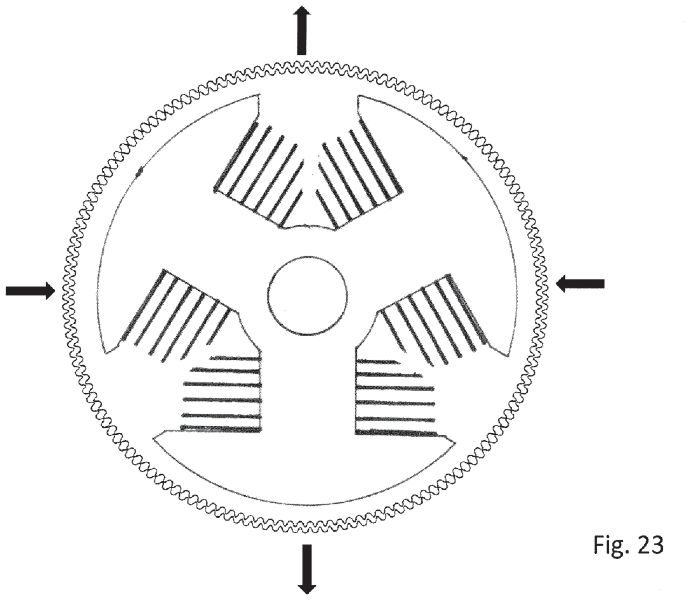

- Figur 23: zeigt ein Getriebe mit einem dreipoligen Stator, der einen Pinring durch elektromagnetische Kräfte verformt,

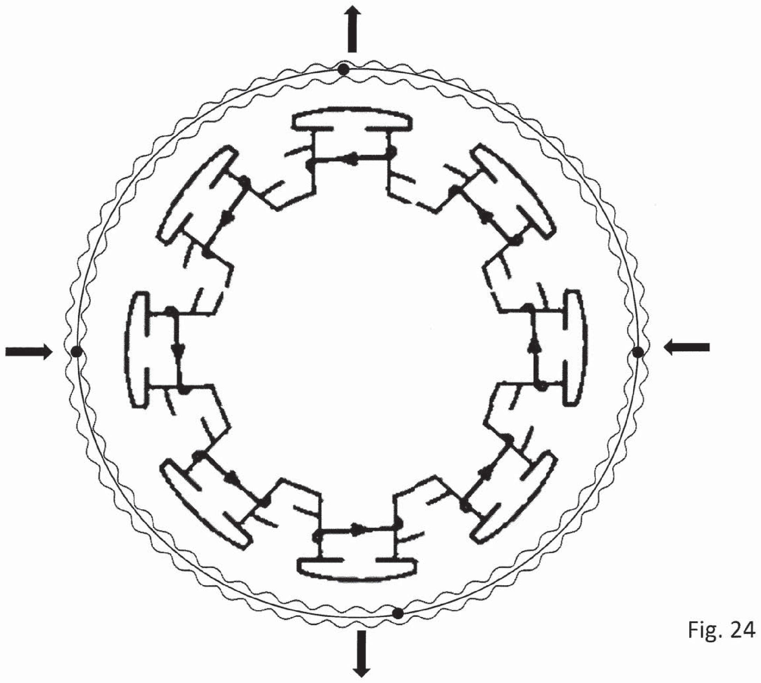

- Figur 24: zeigt ein Getriebe mit einem sechspoligen Stator, der einen Pinring durch elektromagnetische Kräfte verformt,

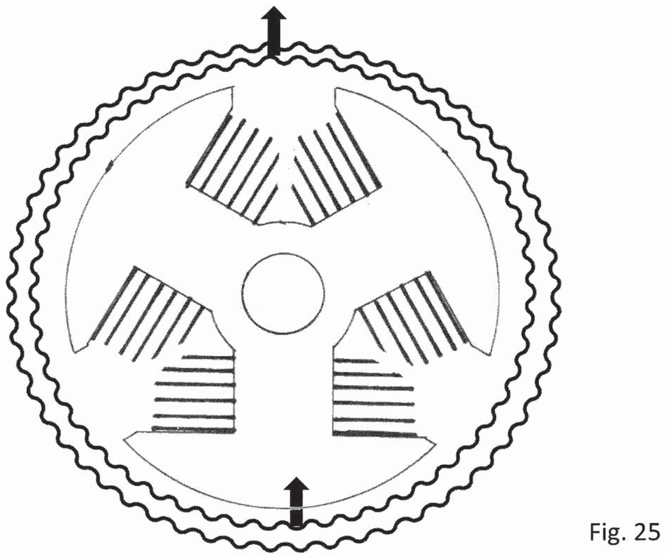

- Figur 25: zeigt ein Getriebe mit einem sechspoligen Stator, der eine innere Verzahnung durch elektromagnetische Kräfte verschiebt,

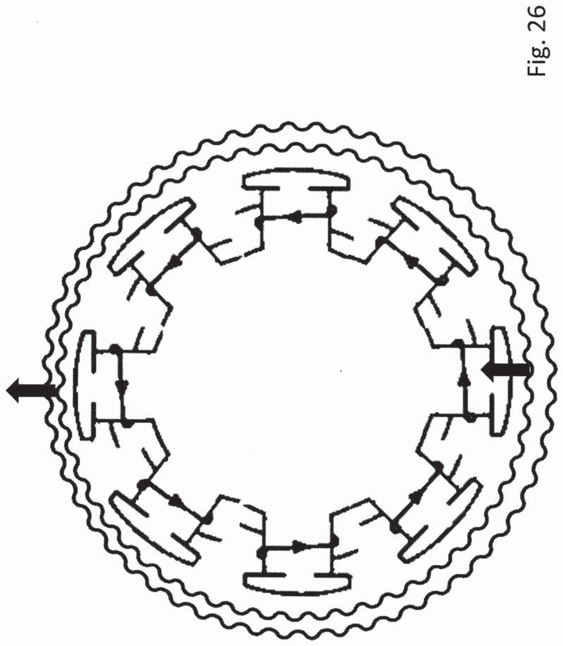

- Figur 26: zeigt ein Getriebe mit einem sechspoligen Stator, der eine innere Verzahnung durch elektromagnetische Kräfte verschiebt,

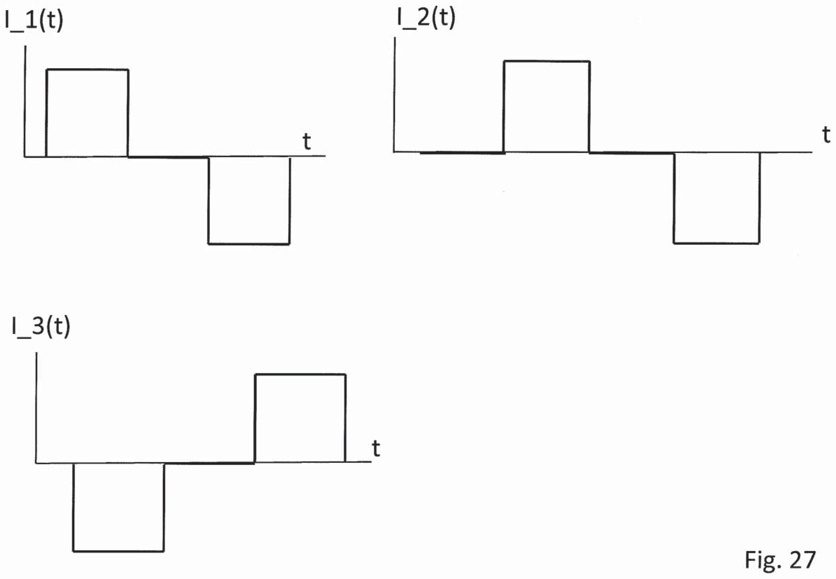

- Figur 27: zeigt eine Bestromung von Statorwindungen des Getriebes von Fig. 21,

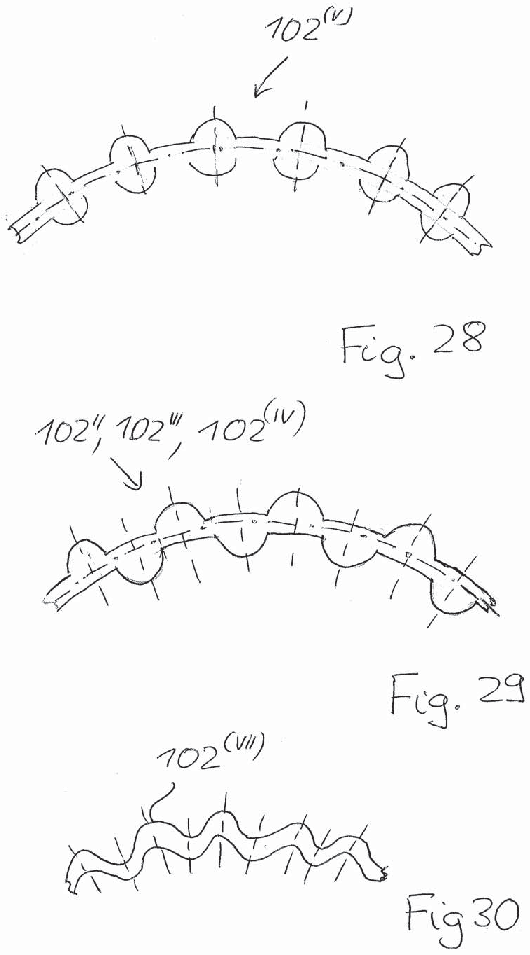

- Figur 28: zeigt einen Querschnitt durch einen Pinring mit einer symmetrischen Lücken-Anordnung, und
- Figur 29: zeigt einen Querschnitt durch einen Pinring mit einer verschobenen Lücken-Anordnung,
- Figur 30: zeigt einen Querschnitt durch einen Pinring mit einer verschobenen Lücken-Anordnung, bei der eine Rückseite der Innenverzahnung die Außenverzahnung bildet.

Im Folgenden werden Einzelheiten bereitgestellt, um die Ausführungsformen der vorliegenden Beschreibung zu erläutern. Es soll jedoch für den Fachmann erkenntlich sein, dass die Ausführungsformen ohne solche Einzelheiten praktiziert werden können.

Fig. 1 zeigt eine perspektivische Ansicht einer ersten Ausführungsform eines Pinrings 201 mit Lücken-Anordnung der Pins 101. Bei einer Lückenanordnung von Pins bzw. Zähnen ist zwischen zwei Pins bzw. Zähnen ein Zwischenraum angeordnet, der mindestens so breit wie eine Breite der Pins bzw. Zähne ist. Als Zahnbreite kann beispielsweise die Erstreckung eines Zahns in Umfangsrichtung auf halber Höhe zwischen Zahngrund und Zahnkopf angesehen werden. Nach einer alternativen Definition entspricht die Zahnbreite der Breite auf Höhe eines Wälzkreises.

Wenn der Pinring mit der Lückenanordnung in ein Getriebe eingebaut ist, dann greift abwechselnd ein Pin oder ein Zahn eines Zugmittels in einen Zahngrund der jeweiligen Außen- oder Innenverzahnung des Getriebes ein, und ein im Umfangsrichtung benachbarter Zahngrund ist ohne Eingriff. Dies gilt für einen Eingriffsbereich, in dem die Pins mit der jeweiligen Innen- oder Außenverzahnung in Eingriff stehen. Vorzugsweise sind die Verzahnungen bzw. die Pins so gestaltet, dass alle Pins oder Zahn eines Zugmittels mit einem gegenüberliegenden Zahn der jeweiligen Innen- oder Außenverzahnung in Berührung bzw. im Eingriff stehen, so dass der Eingriffsbereich sich über den gesamten Umfang bzw. über 360 Grad erstreckt, so wie es in Fig. 18 gezeigt ist. Dabei wird im weiteren Sinn auch als Eingriff bezeichnet, wenn zwei gegenüberliegende Zahnköpfe aufeinander aufliegen, wie es in der Mitte von Fig. 18 für die Außenverzahnung gezeigt ist.

Dieser Eingriff mit Lücken ist in Fig. 18 gezeigt. Und zwar ist der Eingriff mit Lücken für die Außenverzahnung besonders gut im oberen und unteren Bereich der Fig. 18 für die Außenverzahnung erkennbar und ist für die Innenverzahnung besonders gut im mittleren Bereich der Fig. 18 erkennbar.

Fig. 2 zeigt eine Ausschnittvergrößerung des Pinrings 102 von Fig. 1, in der ein Übergangsbereich zwischen den Pins 101 und einem zentralen Auflagering gezeigt ist. Gemäß dem Ausführungsbeispiel von Fig. 1 bis 5 ist der Pinring aus einem Stück gefertigt. Beispielsweise können die seitlich hervorstehenden Pins aus einem Werkstück herausgefräst oder gestanzt sein.

Als Werkstoff für den Pinring 102 von Fig. 1 sowie für die anderen in der vorliegenden Beschreibung offenbarten Pinringe oder Zahnriemen eignet sich beispielsweise eine Stahllegierung, die sich durch gute Stanzbarkeit um Umformbarkeit auszeichnet. Insbesondere kann es sich dabei um eine Mangan-Chrom Stahllegierung wie beispielsweise 16MnCr5, Werkstoffnummer 1.7131 handeln.

Fig. 3 zeigt eine Seitenansicht des Pinrings 102 von Fig. 1, in der ein Winkelabstand zwischen den Pins eingezeichnet ist. Dieser Winkelabstand hängt von einem Radius des Pinrings und von einer Anzahl der gleichmäßig über dem Umfang verteilten Pins ab und beträgt 4,8 Grad im Beispiel von Fig. 3.

Fig. 4 zeigt einen Querschnitt des Pinrings 102 entlang der Schnittlinie A-A von Fig. 3. Wie in Fig. 4 erkennbar ist ein Durchmesser der Pins ungefähr so groß wie eine Dicke des zentralen Auflagerings.

Fig. 5 zeigt eine Frontalansicht des Pinrings 102 von Fig. 1, in der der zentrale Auflagering und die Pins, die rechts und links von dem zentralen Auflagering in axialer Richtung abstehen, gezeigt sind.

Fig. 6 zeigt eine perspektivische Ansicht einer zweiten Ausführungsform eines Pinrings 102' mit Lücken-Anordnung der Pins 101'. Diese Ausführungsform unterscheidet sich von der Ausführungsform von Fig. 1 dadurch, dass der Durchmesser der Pins geringer als eine Dicke des zentralen Auflagerings ist

Fig. 7 zeigt eine Frontalansicht des Pinrings 102' von Fig. 6.

Fig. 8 zeigt eine Seitenansicht des Pinrings 102' von Fig. 6.

Fig. 9 zeigt eine Querschnittsansicht des Pinrings 102' von Fig. 6 entlang der Schnittline A-A von Fig. 8. Der Pinring 102' ist so gefertigt, dass der Durchmesser des Werkstücks sich in axialer Richtung nach außen in einem Übergangsbereich auf einen Durchmesser der Pins verjüngt, der hier in etwa zwei Drittel der Dicke des zentralen Auflagerings beträgt.

Die Figuren 10 bis 13, 15 und 17 zeigen Pinringe, die in der Art eines Zahnriemens ausgeführt sind eine Außenverzahnung und eine Innenverzahnung aufweisen, wobei die Anzahl der Zähne der Außenverzahnung mit der Anzahl der Zähne der Innenverzahnung übereinstimmt. Die Zähne können auch als Pins angesehen werden und die Pinringe von Fig. 10 bis 13, 15 und 17 werden auch als Doppel-Pinringe oder Doppel-Zahnringe bezeichnet.

Die Pinringe der Figuren 10 - 17 können aus einem elastischen Material gefertigt sein und/oder geeignet dimensioniert sein, so dass sie sich insbesondere für eine ovale bzw. ellipsoide Verformung eignen, wobei der Ort der Verformung durch einen radial innerhalb des jeweiligen Pinrings angeordneten rotierenden Transmitter auf einer Kreisbahn rotiert.

Die Pinringe der Figuren 10 - 17 können auch aus einem unelastischen bzw. weniger elastischen Material gefertigt und/oder entsprechend dimensioniert sein, so dass sie sich dazu eignen, durch eine exzentrisch angeordnete zylinderförmige Kurvenscheibe eines Transmitters auf einer Kreisbahn geführt zu werden.

Insbesondere kann der Querschnitt der Zähne einem Querschnitt einer Hälfte eines Pins ähneln, also annähernd halbkreisförmig sein oder bis auf einen Übergangsbereich kreisabschnittsförmig sein. Vorzugsweise ist zumindest der obere Bereich der Zahnköpfe kreisabschnittsförmig abgerundet.

Dieser kreisabschnittsförmig abgerundete obere Bereich kann sich beispielsweise vom Zahnkopf aus gesehen über mindestens 30% oder mindestens 40% einer von der Mitte zwischen Zahngrund und Zahnkopf aus gemessenen Zahnhöhe erstrecken, wodurch einerseits ein größerer Übergangsbereich zwischen Zahnkopf und Zahngrund zu Verfügung gestellt werden kann und andererseits die Zahnform noch genügend ähnlich zu einer Pinform ist.

Durch den Übergangsbereich kann eine Elastizität bereitgestellt werden und es besteht eine Gestaltungsfreiheit, die Dimensionierung der Zahngeometrie des Zahnriemens an eine Außenverzahnung eines Innenrads oder an eine Innenverzahnung eines Außenrads anzupassen.

Gemäß anderer Ausführungsbeispiele kann sich der kreisabschnittsförmige abgerundete obere Bereich vom Zahnkopf aus gesehen über mindestens 70%, mindestens 80% oder mindestens 90% einer von der Mitte zwischen Zahngrund und Zahnkopf aus gemessenen Zahnhöhe erstrecken, wodurch eine möglichst gute Ähnlichkeit mit einer Pinform erreicht wird. Durch die Ähnlichkeit der Zahnform mit der Pinform kann beispielsweise ein möglichst guter Eingriff mit der in der PCT/IB2017/057452 offenbarten Ein-Epizykel-Verzahnung oder der dort ebenfalls offenbarten Zwei-Epizykel-Verzahnung eines Außenrads und/oder eines Innenrads erreicht werden.

Gemäß anderer Ausführungsbeispiele kann sich der kreisabschnittsförmige abgerundete obere Bereich vom Zahnkopf aus gesehen über mindestens 50%, mindestens 60% von der Mitte zwischen Zahngrund und Zahnkopf aus gemessenen Zahnhöhe erstrecken, wodurch ein Kompromiss zwischen einer Pin-ähnlichen Zahnform und einem genügend breiten Übergangsbereich erzielt wird.

Der Zahngrund der Innenverzahnung und der Außenverzahnung kann dagegen flach ausgeführt sein, also einen Abschnitt eines Zylinders bilden, wie es beispielsweise in Fig. 10 bis 13 gezeigt ist.

Insbesondere kann die Zahnform der Innenverzahnung mit der Zahnform der Außenverzahnung übereinstimmen bzw. baugleich sein. Vorzugsweise entspricht die Zahnform der Innen- und der Außenverzahnung einer geradlinigen Zahnform bzw. einer Zahnform eines Stirnrads, die beispielsweise durch Fräsen einfach herzustellen ist. Eine in den Figuren nicht gezeigte Schrägverzahnung ist auch möglich.

Die Doppel-Zahnringe können unter anderem eine Ein-Epizykelverzahnung oder eine Zwei-Epizykelverzahnung aufweisen, wie sie in der PCT/IB2017/057452 beschrieben sind.

Fig. 10 zeigt eine perspektivische Ansicht eines Pinrings 102'' bzw. Zahnriemens 102'' mit versetzter Lücken-Anordnung, wobei die Pins bzw. Zähne einer Innenverzahnung 106 und einer Außenverzahnung 105 gegeneinander versetzt sind. Und zwar liegt einem Zahn bzw. Pin der Außenverzahnung 105 jeweils ein Zahngrund bzw. Pin der Innenverzahnung 106 gegenüber.

Fig. 11 zeigt eine perspektivische Ansicht eines weiteren Pinrings 102‴ mit versetzter Lücken-Anordnung mit zentralen Auflagebereichen 107, 108 an Innen- und Außenseite, wobei eine Innenverzahnung 105' gegenüber einer Außenverzahnung 106' versetzt ist.

Fig. 12 zeigt eine perspektivische Ansicht eines weiteren Pinrings 102^{(IV)} mit versetzter Lücken-Anordnung mit einem zentralen Auflagebereich 107 an der Innenseite, wobei eine Innenverzahnung 105'' gegenüber einer Außenverzahnung 106'' versetzt ist.

Der zentrale Auflagebereich 107 an der Innenseite kann insbesondere dazu dienen, einen verbesserten Kontakt mit einer Kurvenscheibe bzw. einer Außenfläche eines Transmitters bereitzustellen und der zentrale Auflagebereich 108 an der Außenseite kann insbesondere dazu dienen, einen verbesserten Kontakt mit einer zylinderförmigen Auflagefläche eines Getriebegehäuses herzustellen, die der Außenfläche des Transmitters gegenüberliegt.

Wenn kein zentraler Auflagebereich an der Innenseite des Zahnriemens vorhanden ist, wie beispielsweise bei dem Zahnriemen von Fig. 12, dann kann für eine verbesserte Auflage eines Transmitters eine zur Innenverzahnung des Zahnriemens passende Außenverzahnung radial innerhalb des Zahnriemens angeordnet sein. Insbesondere bei einem Getriebe mit abgetriebenem Innenrad kann diese Außenverzahnung auf einem Kugellager angeordnet sein, wogegen diese Außenverzahnung bei einem nicht abgetriebenen, statischen Innenrad an einem Getriebegehäuse befestigt sein kann.

Wenn kein zentraler Auflagebereich an der Außenseite des Zahnriemens vorhanden ist, wie beispielsweise bei dem Zahnriemen von Fig. 12, dann kann für eine verbesserte Auflage eine zur Außenverzahnung des Zahnriemens passende Außenverzahnung radial außerhalb des Zahnriemens angeordnet sein. Insbesondere bei einem Getriebe mit abgetriebenem Außenrad kann diese Außenverzahnung auf einem Kugellager angeordnet sein, wogegen sie bei einem Getriebe mit nicht abgetriebenem, statischen Außenrad, wie bei dem Getriebe von Fig. 18 - 20, an einem Getriebegehäuse befestigt sein kann.

Eine Außenradverzahnung kann sich aber auch über die gesamte Breite des Zahnriemens erstrecken, wodurch ebenfalls ein guter Kontakt erreicht wird.

Fig. 13 zeigt eine perspektivische Ansicht eines weiteren Pinrings 102^{(V)} mit einer symmetrischen Lücken-Anordnung, bei dem die Zähne bzw. Pins einer Innenverzahnung 106‴ und einer Außenverzahnung 105‴ einander gegenüberliegen.

Auch bei einem Zahnriemen mit symmetrischer Lücken-Anordnung, wie in Fig. 13, kann ein zentraler Auflagebereich an einer Innenseite des Zahnriemens oder an einer Außenseite des Zahnriemens vorgesehen sein.

Fig. 14 zeigt eine perspektivische Ansicht eines weiteren Pinrings 102^{(VI)} mit symmetrischer Lücken-Anordnung, bei dem zwischen Pins 101‴ radiale Zwischenräume angeordnet sind.

Bei dem Pinring von Fig. 14 sind die Pins 101‴ so geformt, dass ihr Querschnitt ein längliches Oval bildet, was besonders gut in der Ausschnittvergrößerung von Fig. 16 zu erkennen ist. Und zwar bildet der Querschnitt der Pins 101'' ein Rechteck mit zwei halbkreisförmigen Enden an den schmaleren Seiten des Rechtecks, wobei die halbkreisförmigen Enden jeweils gleich sein können.

Fig. 15 zeigt eine perspektivische Ansicht eines weiteren Pinrings 102^{(VII)} bzw. Zahnriemens oder Doppel-Zahnrings 102^{(VII)}, bei dem die Zahngründe jeweils die Zahnköpfe der radial gegenüberliegenden Verzahnung bilden. Somit bildet eine Rückseite einer Außenverzahnung 105^{(IV)} gleichzeitig eine Innenverzahnung 106^{(IV)} und umgekehrt.

Die Form des Doppel-Zahnrings ähnelt einem zylinderförmigen Wellblechstreifen, was besondere gut in der der Ausschnittvergrößerung von Fig. 17 erkennbar ist.

Die Ausführung des Doppel-Zahnrings gemäß Fig. 15 kann eine gute Elastizität bei einfacher und materialsparender Herstellung bereitstellen.

Fig. 16 zeigt eine Ausschnittvergrößerung von Fig. 14.

Fig. 17 zeigt eine Ausschnittvergrößerung von Fig. 15.

Fig. 18 zeigt eine abtriebsseitige Frontalansicht eines Harmonic-Pinring-Getriebes mit ovaler Kurvenscheibe, in der ein Pinring 102'' gemäß Fig. 10 als Zugmittel eingebaut ist, und in der, von innen nach außen, ein Innenbereich einer Rotor-Transmitter-Einheit 109 eines nicht gezeigten Innenläufermotors, eine Innenrad-Abtriebswellen-Einheit 110, ein Pinring 102'' gemäß Fig. 10 und eine Außenrad-Baugruppe 111 gezeigt sind.

Fig. 19 zeigt einen Querschnitt entlang der Schnittlinie A-A von Fig. 18. Die Innenrad-Abtriebswellen-Einheit 110 ist über ein Abtriebswellen-Kugellager auf der Rotor-Transmitter-Einheit gelagert. Ein verformbares Kugellager ist auf einer Kurvenscheibe der Rotor-Transmitter Einheit 109 gelagert und der Pinring gemäß Figur 12 ist auf dem verformbaren Kugellager angeordnet. Radial außerhalb des Pinrings ist die Außenradbaugruppe 111 angeordnet, die aus einem antriebsseitigen Außenring bzw. Außenrad, einem Außenrad-Halter, und einem abtriebsseitigen Außenring bzw. Außenrad besteht. Die Außenrad-baugruppe ist an einem in Fig. 18 bis 20 nicht gezeigten Getriebegehäuse befestigt.

Fig. 20 zeigt eine Explosionsansicht des Getriebes von Fig. 18, in der von links nach rechts, der antriebsseitige Außenring bzw. das abtriebsseitige Außenrad, der Außenrad-Halter, der abtriebsseitige Außenring bzw. das abtriebsseitige Außenrad, der Pinring gemäß Fig. 13, die Rotor-Transmitter-Einheit 109, das verformbare Kugellager, das Abtriebswellen-Kugellager und die Innenrad-Abtriebswellen-Einheit 110 gezeigt sind.

Weitere in Fig. 20 nicht gezeigte Bauteile eines Getriebes oder einer Motor-Getriebe-Einheit gemäß Fig. 20 können ähnlich zu den in der PCT/IB2017/057452 gezeigten Getrieben ausgeführt sein, und dabei insbesondere den in Fig. 1 bis 10 und Fig. 11 bis 20 der PCT/IB2017/057452 gezeigten Getrieben. Ebenso können weitere hier nicht beschriebene Einzelheiten des Getriebes von Fig. 20 wie in dem Getriebe von Fig. 1 bis 10 der PCT/IB2017/057452 ausgeführt sein.

Das Getriebe von Fig. 18 ist nur ein Beispiel für die Verwendungsmöglichkeiten des Pinrings von Fig. 13 als Zugmittel in einem Getriebe. Vielmehr kann der Pinring von Fig. 13 und auch die anderen in Fig. 1 bis 17 gezeigten Pinringe auch in anderen Getrieben als Zugmittel eingesetzt werden. Insbesondere können die Pinringe auch in den Getrieben eingesetzt werden, die obenstehend in der durch Rückbezüge in die vorliegende Beschreibung aufgenommenen PCT/IB2017/057452 offenbart sind, wobei gegebenenfalls die Form der Pins oder die Form der Innen- oder Außenverzahnung geeignet angepasst wird.

Die in Fig. 1 bis 17 gezeigten Pinringe sind dazu geeignet, in einem Untersetzungsgetriebe als Zugmittel zwischen einer Innenverzahnung und einer Außenverzahnung eingesetzt zu werden, wobei der jeweilige Pinring in die Innenverzahnung und in die Außenverzahnung des Untersetzungsgetriebes eingreift. Dabei kann es sich speziell um eine Getriebe mit einem Transmitter handeln, der den Pinring von der Innenverzahnung abhebt und gegen die Außenverzahnung drückt.

Die folgenden Figuren 21 - 27 zeigen Getriebekomponenten von Getrieben mit einem rotorlosen Motor, bei denen das jeweilige Getriebe durch Verformung oder Verschiebung eines Zugmittels oder Verschiebung einer Innen- oder Außenverzahnung mittels elektromagnetischer Kräfte eines Stators angetrieben wird. Dabei bewegen die elektromagnetischen Kräfte eine erste Verzahnung oder Pins an einer zweiten Verzahnung entlang, die dadurch in eine Drehbewegung versetzt wird, wobei die elektromagnetischen Kräfte vorwiegend in einer radialen Richtung wirken.

Dies steht im Gegensatz zu Getrieben mit einem Rotor, bei denen zunächst eine Rotationsbewegung eines Rotors erzeugt wird, aus der erst dann eine Radialbewegung erzeugt wird, wie beispielsweise bei einem Spannwellengetriebe mit einer auf einem verformbaren Kugellager gelagerten Stahlbüchse.

Die Getriebekomponenten von Fig. 21 bis 27 können insbesondere in einem Exzentergetriebe, einem Zykloidgetriebe oder einem harmonischen Ketten- oder Pinring-Getriebe zur Erzeugung einer Getriebeuntersetzung oder -übersetzung verwendet werden. Die Getriebekomponenten von Fig. 21 bis 27 können insbesondere auch in den in der PCT/IB2017/057452 offenbarten Getrieben verwendet werden, wobei die im Drehmomentverlauf zwischen Stator und Innen- und Außenrad liegenden Bauelemente durch die in Fig. 21 bis 27 schematisch gezeigten Bauelemente ersetzt werden bzw. geeignet modifiziert werden.

Zur Erzeugung der Kraft auf die Pins bzw. die Verzahnung durch ein elektromagnetisches Feld des Stators kann die Verzahnung oder die Pins mit magnetischen Bereichen oder mit Permanentmagneten versehen sein oder aus einem magnetischen Material bestehen. Die Verzahnung oder die Pins kann auch zusätzlich zu der Führung durch die elektromagnetischen Kräfte durch eine mechanische Führung geführt werden, insbesondere wenn die gesamte Verzahnung oder der gesamte Pinring auf einer vorbestimmten Bahn, beispielsweise auf einer exzentrischen Kreisbahn, geführt wird.

Die Figuren 21 und 22 zeigen Getriebe, bei denen ein Zugmittel, insbesondere ein Pinring, durch elektromagnetische Kräfte eines Motors an einer inneren Verzahnung und an einer äußeren Verzahnung entlang bewegt wird.

In Fig. 21 und 22 ist durch einen unteren Pfeil angezeigt, dass ein Pinring in einem ersten Bereich von einer Außenverzahnung wegbewegt und in eine Innenverzahnung hineingedrückt wird und in einem dazu radial gegenüberliegenden zweiten Bereich von der Innenverzahnung weggedrückt und in eine Außenverzahnung hineingedrückt wird.

Der erste Bereich ist ein Bereich minimalen Kontakts oder Eingriffs mit der Außenverzahnung und maximalen Kontakts oder Eingriffs mit der Innverzahnung. Der zweite Bereich ist ein Bereich maximalen Kontakts oder Eingriffs mit der Außenverzahnung und minimalen Kontakts oder Eingriffs mit der Innverzahnung. Die Statorwindungen des Stators werden so angesteuert oder bestromt, dass der erste Bereich und der dazu gegenüberliegende zweite Bereich um eine zentrale Mittelachse rotieren.

Die Figuren 23 und 24 zeigen Getriebe, bei denen ein Zugmittel, insbesondere ein Pinring, durch elektromagnetische Kräfte eines Motors elliptisch verformt und dadurch an einer inneren Verzahnung und an einer äußeren Verzahnung entlang bewegt wird.

In Fig. 23 und 24 ist durch ein senkrechtes Paar von Pfeilen angezeigt, dass ein Pinring in einem ersten Bereich und einem radial dazu gegenüberliegenden zweiten Bereich auseinandergedrückt wird, und es ist durch ein waagerechtes Paar von Pfeilen angezeigt, dass der Pinring in einem dritten Bereich und einem radial dazu gegenüberliegenden vierten Bereich zusammengezogen wird. Dabei erfolgt das Auseinanderdrücken, das Zusammenziehen oder beide durch von dem Stator ausgeübte elektromagnetische Kräfte, wobei die elektromagnetischen Kräfte insbesondere elektrostatische Kräfte sein können. Der dritte und der vierte Bereich sind gegenüber dem ersten Bereich und dem zweiten Bereich um 90 Grad versetzt.

Der erste Bereich und der zweite Bereich sind Bereiche minimalen Kontakts oder Eingriffs mit der Innenverzahnung und maximalen Kontakts oder Eingriffs mit der Innverzahnung. Der dritte Bereich und der vierte Bereich sind Bereiche maximalen Kontakts oder Eingriffs mit der Innenverzahnung und minimalen Kontakts oder Eingriffs mit der Außenverzahnung. Die Statorwindungen des Stators werden so angesteuert oder bestromt, dass der erste Bereich, der zweite Bereich, der dritte Bereich und der vierte Bereich um eine zentrale Mittelachse rotieren.

Die Figuren 25 und 26 zeigen Getriebe, bei denen eine Innenverzahnung durch elektromagnetische Kräfte eines Stators an einer äußeren Verzahnung entlang bewegt wird, ähnlich wie dies zum Beispiel bei einem Zykloidgetriebe der Fall ist. Bei diesen Getriebevarianten ist kein Zugmittel zwischen der Innenverzahnung und der Außenverzahnung angeordnet. Stattdessen greift die Innenverzahnung direkt in die Außenverzahnung ein oder rollt auf der Außenverzahnung ab.

In Fig. 25 und 26 ist durch einen unteren Pfeil angezeigt, dass eine Innenverzahnung in einem ersten Bereich von einer Außenverzahnung wegbewegt wird und in einem dazu radial gegenüberliegenden zweiten Bereich in die Außenverzahnung hineingedrückt wird.

Der erste Bereich ist ein Bereich minimalen Kontakts oder Eingriffs mit der Außenverzahnung. Der zweite Bereich ist ein Bereich maximalen Kontakts oder Eingriffs mit der Außenverzahnung. Die Statorwindungen des Stators werden so angesteuert oder bestromt, dass der erste Bereich und der dazu gegenüberliegende zweite Bereich um eine zentrale Mittelachse rotieren.

Die Figuren 21 bis 26 zeigen Drei- oder Sechspol-Elektromotore bzw. Statoren. Es können aber auch Elektromotoren mit 4 Polschuhen oder mit mehr als 6 Polschuhen verwendet werden. Aus Gründen der Übersichtlichkeit sind die Windungen bei den Dreipolmotoren in Fig. 21 bis 26 nicht gezeigt und die Anschlüsse der Windungen bei dem Sechspolmotoren sind in Fig. 21 bis 26 nicht gezeigt.

Jeder Polschuh eines Elektromotors gemäß der vorliegenden Beschreibung kann eigene Wicklung aufweisen, die separat angesteuert wird oder es können Polschuhe in Reihe geschaltet sein und gemeinsam angesteuert werden. Die in Reihe geschalteten Polschuhe können gleichviele Wicklungen oder unterschiedlich viele Wicklungen aufweisen und sie können im gleichen Sinn oder gegensinnig gewickelt sein. Insbesondere können gegenüberliegende Polschuhe zur Erzeugung von gleichgroßen einander entgegengesetzter Kräften jeweils in Reihe geschaltet und entgegengesetzt gewickelt sein, was beispielsweise für eine elliptische Deformation eines Pinrings vorteilhaft ist.

Weiterhin ist es auch möglich, dass nicht jeder Polschuh mit einer Wicklung versehen ist, sondern dass beispielsweise nur jeder zweite Polschuh umwickelt ist. Wenn die Polschuhe einzeln ansteuerbar sind, beispielsweise durch eine Leistungselektronik, oder wenn jeweils Paare von gegenüberliegenden Polschuhen einzeln ansteuerbar sind ergibt sich eine verbesserte Feinkontrolle der Ansteuerung.

Fig. 27 zeigt ein Beispiel einer einfachen Ansteuerung eines dreipoligen Motors, bei denen die Polschuhe des dreipoligen Motors separat bestromt werden, wobei ein vordefiniertes Signal verwendet wird. Hierbei ist die Bestromung I3(t) des dritten Polschuhs entgegengesetzt zu der Bestromung I1(t) des ersten Polschuhs und die Bestromung I2(t) des zweiten Polschuhs ist um die Zeitdauer des konstanten Signals von I1(t) gegenüber der Bestromung des ersten Polschuhs phasenverschoben. Die entgegengesetzte Bestromung kann zum Beispiel durch entgegengesetzte Wicklung oder auch durch separate Bestromung erzielen werden.

Je nach Erfordernis sind auch aufwendigere Ansteuerungen möglich. Beispielsweise kann eine Amplitude variieren anstatt abschnittsweise konstant zu sein, wie in Fig. 27 gezeigt. Weiterhin kann zur Verbesserung der Ansteuerung der Statorspulen ein Regelkreis wie beispielsweise ein PID Regler anstatt der in Fig. 27 gezeigten Feed-Forward Steuerung verwendet werden.

Als Sensorsignale für den Regelkreis können die Stromsignale in den Statorspulen verwendet werden, wodurch vermieden werden kann, dass separate Sensoren, wie beispielsweise Hall-Sensoren, eingebaut werden. Beispielsweise können die Stromsignale in einer Ansteuerungspause gemessen werden, in der die jeweilige Statorwicklung nicht bestromt ist. Die Parameter des Regelkreises können gemäß den Erfordernissen verändert werden, beispielsweise zur Erzeugung eines vorbestimmten Drehmoments oder zur Erzeugung einer vorbestimmten Rotationsgeschwindigkeit.

Fig. 28 zeigt einen Querschnitt durch einen Zahnriemen 102^{(V)} mit einer symmetrischen Lücken-Anordnung.

Fig. 29 zeigt einen Querschnitt durch einen Zahnriemen 102'', 102‴, 102^{(IV)} mit einer verschobenen Lücken-Anordnung.

Fig. 30 zeigt einen Querschnitt durch einen Zahnriemen 102^{(VII)} mit einer verschobenen Lücken-Anordnung, bei der eine Rückseite der Innenverzahnung die Außenverzahnung bildet. In den Figuren 28 - 30 ist eine Dicke des Zahnriemens gegenüber einer Höhe der Verzahnungen nicht maßstäblich eingezeichnet.

Die oben genannten Ausführungsbeispiele und weitere Ausführungsbeispiele der vorliegenden Beschreibung sind auch in den Merkmalen der folgenden ersten Auflistung offenbart, die mit anderen Merkmalen der vorliegenden Beschreibung kombiniert werden können.

Die Dimensionierung gegenüberliegender Verzahnungen und, wenn vorhanden, eines dazwischenliegenden Übertragungsmittels kann gemäß der vorliegenden Beschreibung insbesondere so gewählt sein, dass ein vollständiger Zahneingriff vorliegt, und zwar sowohl bei einem Pinring-Getriebe als auch bei einem Spannwellengetriebe oder einem Zykloid-Getriebe, wobei das Pinring-Getriebe und das Spannwellengetriebe als Bauform mit einem exzentrischem Transmitter oder auch als Bauform mit einem ovalen Transmitter gebaut werden können.
1. Harmonisches Pinring Getriebe, das aufweist
   - ein erstes Rad mit einer ersten Verzahnung und
   - ein zweites Rad mit einer zweiten Verzahnung,
   - einen Pinring mit runden Eingriffsbereichen,
   - einen umlaufenden Transmitter zum Rakeln der Eingriffsbereiche des Pinrings in die erste Verzahnung des ersten Rads und in die zweite Verzahnung des zweiten Rads,

   wobei das erste Rad, der Transmitter und das zweite Rad konzentrisch zueinander angeordnet sind und der Transmitter radial innerhalb des Pinrings angeordnet ist, und wobei der Pinring zwischen dem ersten Rad und dem zweiten Rad angeordnet ist, wobei der Transmitter eine exzentrisch zu einer Getriebemittelachse angeordnete Transmitterscheibe aufweist, wobei die erste Verzahnung des ersten Rads und die zweite Verzahnung des zweiten Rads gemäß einer Epizykelkonstruktion geformt ist, wobei Orte auf der jeweiligen Zahnoberfläche der ersten Verzahnung bzw. der zweiten Verzahnung jeweils durch einen radialen Abstand von der Getriebemittelachse in Abhängigkeit von einem Zykelwinkel bestimmt sind,
   wobei der radiale Abstand seinerseits durch eine Äquidistante zu einer Radkurve bestimmt ist,
   wobei Orte auf der Radkurve jeweils durch die Vektorsumme eines Zykelvektors und eines Epizykelvektors bestimmt sind, wobei ein Anfangspunkt des Zykelvektors auf der Getriebemittelachse liegt und ein Anfangspunkt des Epizykelvektors im Endpunkt des Zykelvektors liegt, wobei ein Epizykelwinkel des Epizykelvektors n-mal so groß ist wie der Zykelwinkel und eine Länge des Zykelvektors größer als eine Länge des Epizykelvektors ist, wobei n eine Anzahl der runden Eingriffsbereiche des harmonischen Pinring-Getriebes ist, die mindestens drei ist.
2. Harmonisches Pinring Getriebe nach Aufzählungspunkt 1, wobei das erste Rad ein Innenrad
   mit einer Außenverzahnung ist und das zweite Rad ein Außenrad mit einer Innenverzahnung
   ist, wobei bei der Außenverzahnung des Innenrads der Epizykelwinkel in derselben Richtung wie der Zykelwinkel gemessen wird und die Äquidistante eine innere Äquidistante ist,
   und wobei bei der Innenverzahnung des Außenrads der Epizykelwinkel in entgegengesetzter Richtung zu dem Zykelwinkel gemessen wird und die Äquidistante eine äußere Äquidistante ist.
3. Harmonisches Pinring Getriebe nach Aufzählungspunkt 1, wobei das erste Rad und das zweite Rad jeweils ein Außenrad mit einer Innenverzahnung ist,
   wobei bei der Innenverzahnung der beiden Außenräder der Epizykelwinkel in entgegengesetzter Richtung zu dem Zykelwinkel gemessen wird und die Äquidistante eine äußere Äquidistante ist.
4. Harmonisches Pinring Getriebe nach Aufzählungspunkt 3, wobei die jeweilige Äquidistante
   eine Äquidistante im Abstand der Summe eines Radius der runden Eingriffsbereiche und einem Korrekturwert ist, wobei der Korrekturwert von einem Getriebespiel abhängt.
5. Harmonisches Pinring Getriebe nach Aufzählungspunkt 3 oder 4, wobei das harmonische Pinring-Getriebe ein Wälzlager aufweist, das auf der Transmitterscheibe aufliegt, wobei
   der Zykelradius gleich dem halben Durchmesser des Wälzlagers ist.
6. Harmonisches Pinring Getriebe nach Aufzählungspunkt 3 oder 4, wobei der Zykelradius gleich dem halben Durchmesser der Transmitterscheibe ist.
7. Harmonisches Pinring Getriebe nach einem der Aufzählungspunkte 3 bis 6, wobei der Epizykelradius gleich einem halben Exzenterversatz ist, um den die Transmitterscheibe gegenüber der Getriebemittelachse versetzt ist.
8. Harmonisches Pinring-Getriebe nach einem der Aufzählungspunkte 3 bis 7, wobei eine Antriebswelle mit dem Transmitter verbunden ist.
9. Harmonisches Pinring-Getriebe nach Aufzählungspunkt 8, wobei eine Abtriebswelle mit dem ersten Rad verbunden ist.
10. Harmonisches Pinring-Getriebe nach Aufzählungspunkt 8, wobei eine Abtriebswelle mit dem zweiten Rad verbunden ist.
11. Harmonisches Pinring-Getriebe nach Aufzählungspunkt 8, wobei eine Abtriebswelle mit dem Pinring verbunden ist.
12. Innenrad für ein harmonisches Pinring-Getriebe mit einer Außenverzahnung, wobei die Zahnoberfläche der Außenverzahnung durch einen radialen Abstand von einer Mittelachse des Innenrads in Abhängigkeit von einem Zykelwinkel bestimmt ist, wobei der radiale Abstand von der Mittelachse seinerseits durch eine innere Äquidistante zu einer Radkurve bestimmt ist, wobei ein Ort auf der Radkurve jeweils durch die Vektorsumme eines Zykelvektors, eines ersten Epizykelvektors und eines zweiten Epizykelvektors bestimmt ist, wobei ein Anfangspunkt des Zykelvektors auf der Mittelachse liegt, ein Anfangspunkt des ersten Epizykelvektors im Endpunkt des Zykelvektors liegt und ein Anfangspunkt des zweiten Epizykelvektors im Endpunkt des ersten Epizykelvektors liegt,
   und wobei ein Epizykelwinkel des ersten Epizykelvektors n - 1 mal so groß ist wie der Zykelwinkel und ein Epizykelwinkel des zweiten Epizykelvektors n - 3 mal so groß ist wie der Zykelwinkel, wobei n eine Anzahl von Pins des harmonischen Pinring-Getriebes ist, die mindestens vier ist, wobei der erste Epizykelwinkel in derselben Richtung wie der Zykelwinkel gemessen wird und der zweite Epizykelwinkel in einer entgegengesetzten Richtung zu dem Zykelwinkel gemessen wird, und wobei eine Länge des Zykelvektors größer ist als die Summe der Längen des ersten Epizykelvektors und des zweiten Epizykelvektors, und eine Länge des ersten Epizykelvektors größer ist als eine Länge des zweiten Epizykelvektors.
13. Außenrad für ein harmonisches Pinring-Getriebe mit einer Innenverzahnung, wobei Orte auf der Zahnoberfläche der Innenverzahnung jeweils durch einen radialen Abstand von einer Mittelachse des Außenrads in Abhängigkeit von einem Zykelwinkel bestimmt sind,
   wobei der radiale Abstand seinerseits durch eine äußere Äquidistante zu einer Radkurve definiert ist, wobei Orte auf der Radkurve jeweils durch die Vektorsumme eines Zykelvektors, eines ersten Epizykelvektors und eines zweiten Epizykelvektors bestimmt ist, wobei ein Anfangspunkt des Zykelvektors auf der Mittelachse liegt, ein Anfangspunkt des ersten Epizykelvektors im Endpunkt des Zykelvektors liegt und ein Anfangspunkt des zweiten Epizykelvektors im Endpunkt des ersten Epizykelvektors liegt,
   und wobei ein Epizykelwinkel des ersten Epizykelvektors (n + 1)-mal so groß ist wie der Zykelwinkel und ein Epizykelwinkel des zweiten Epizykelvektors (n + 3)-mal so groß ist wie der Zykelwinkel, wobei n eine Anzahl von Pins des harmonischen Pinring-Getriebes ist, die mindestens vier ist, wobei der erste Epizykelwinkel in einer entgegengesetzten Richtung zu dem Zykelwinkel gemessen wird und der zweite Epizykelwinkel in derselben Richtung wie der Zykelwinkel gemessen wird, und wobei eine Länge des Zykelvektors größer als die Summe der Längen des ersten Epizykelvektors und des zweiten Epizykelvektors ist, und eine Länge des ersten Epizykelvektors größer als eine Länge des zweiten Epizykelvektors ist.
14. Harmonisches Pinring Getriebe, das aufweist
   - ein Innenrad gemäß Aufzählungspunkt 12 und
   - ein Außenrad gemäß Aufzählungspunkt 13,
   - einen Pinring mit runden Eingriffsbereichen,
   - einen umlaufenden Transmitter zum Rakeln der runden Eingriffsbereiche des Pin-Rings in die Innenverzahnung des Außenrads und in die Außenverzahnung des Innenrads, wobei das Innenrad, der Transmitter und das Außenrad konzentrisch zueinander angeordnet sind, der Transmitter radial innerhalb des Pinrings angeordnet ist, und wobei der Pinring zwischen dem Innenrad und dem Außenrad angeordnet ist.
15. Harmonisches Pinring Getriebe, das aufweist
   - ein erstes Außenrad gemäß Aufzählungspunkt 13 und
   - ein zweites Außenrad gemäß Aufzählungspunkt 13,
   - einen Pinring mit runden Eingriffsbereichen,
   - einen umlaufenden Transmitter zum Rakeln der runden Eingriffsbereiche des Pin-Rings in die Innenverzahnung des ersten Außenrads und in die Innenverzahnung des zweiten Außenrads,
   wobei das der Transmitter, das erste Außenrad und das zweite Außenrad konzentrisch zueinander angeordnet sind, der Transmitter radial innerhalb des Pinrings angeordnet ist, und wobei der Pinring in axialer Richtung zwischen dem ersten Außenrad und dem zweiten Außenrad angeordnet ist.
16. Harmonisches Pinring-Getriebe nach Aufzählungspunkt 14 oder Aufzählungspunkt 15,
   wobei eine Antriebswelle mit dem Transmitter verbunden ist.
17. Harmonisches Pinring-Getriebe nach Aufzählungspunkt 16, wobei eine Abtriebswelle mit dem Pinring verbunden ist.
18. Harmonisches Pinring-Getriebe nach Aufzählungspunkt 14, wobei eine Antriebswelle mit dem Transmitter verbunden ist und eine Abtriebswelle mit dem Innenrad verbunden ist.
19. Harmonisches Pinring-Getriebe nach Aufzählungspunkt 14, wobei eine Antriebswelle mit dem Transmitter verbunden ist und eine Abtriebswelle mit dem Außenrad verbunden ist.
20. Harmonisches Pinring Getriebe nach Aufzählungspunkt 15, wobei eine Antriebswelle mit dem Transmitter verbunden ist und eine Abtriebswelle mit einem der beiden Außenräder verbunden ist.
21.Harmonisches Pinring Getriebe nach einem der Aufzählungspunkte 14 bis 20, wobei die jeweilige Äquidistante eine Äquidistante im Abstand der Summe eines Radius der runden Eingriffsbereiche und eines Korrekturwerts ist, wobei der Korrekturwert durch ein Getriebespiel bestimmt ist.
22. Harmonisches Pinring Getriebe nach einem der Aufzählungspunkte 14 bis 21, wobei der Transmitter eine oval geformte Kurvenscheibe und ein flexibles Wälzlager aufweist, das auf der oval geformten Kurvenscheibe aufliegt, wobei der Zykelradius gleich der Summe aus einem halben Durchmesser des flexiblen Wälzlagers und einem Korrekturwert ist.
23. Harmonisches Pinring Getriebe nach einem der Aufzählungspunkte 14 bis 21, wobei der Transmitter eine erste exzentrisch zu einer Getriebemittelachse angeordnete Kreisscheibe und eine zweite exzentrisch zu der Getriebemittelachse angeordnete Kreisscheibe aufweist,
   wobei der Zykelradius gleich der Summe aus einem mittleren Radius der Hüllkurve der beiden exzentrisch angeordneten Kreisscheiben und einem Korrekturwert ist.
24. Harmonisches Pinring Getriebe nach einem der Aufzählungspunkte 14 bis 23, wobei der erste Epizykelradius kleiner oder gleich der Summe aus einem halben Pinring-Hub und einem zweiten Korrekturwert ist, wobei der zweite Korrekturwert kleiner oder gleich null ist.
25. Harmonisches Pinring Getriebe nach einem der Aufzählungspunkte 14 bis 24, wobei die Länge des zweiten Epizykelvektors ein Drittel der Länge des ersten Epizykelvektors beträgt.

Die oben genannten Ausführungsbeispiele und weitere Ausführungsbeispiele der vorliegenden Beschreibung sind auch in den Merkmalen der folgenden zweiten Auflistung offenbart, die mit anderen Merkmalen der vorliegenden Beschreibung kombiniert werden können.
1. Harmonisches Pinring-Getriebe mit einer Eingangswelle und einer Ausgangswelle, wobei das Getriebe die folgenden Bestandteile aufweist:
   - ein erstes Außenrad, ein Innenrad, das konzentrisch in Bezug auf das erste Außenrad in einer ersten axialen Ebene angeordnet ist,

   ein zweites Außenrad, das in einer zweiten axialen Ebene angeordnet ist, ein Zugmittel, das sich zwischen dem ersten Außenrad und dem Innenrad erstreckt,
   einen umlaufenden Transmitter, der das Zugmittel von einem äußeren Umfang des Innenrads abhebt und gegen einen inneren Umfang des ersten Außenrads drückt,
   wobei der Transmitter eine Antriebs-Hohlwelle und eine Kurvenscheibe aufweist, wobei
   die Kurvenscheibe in einer dritten axialen Ebene angeordnet ist, die sich zwischen der ersten axialen Ebene und der zweiten axialen Ebene befindet, und wobei die Kurvenscheibe in einem Stück mit der Antriebs-Hohlwelle ausgebildet ist.
2. Harmonisches Pinring-Getriebe nach Aufzählungspunkt 1, wobei das Zugmittel als ein Pinring ausgebildet ist, wobei Pins an zwei gegenüberliegenden Seiten von einem mittleren Bereich hervorstehen, wobei der mittlere Bereich in der dritten axialen Ebene angeordnet ist, und wobei der umlaufende Transmitter die Pins von einem äußeren Umfang des Innenrads abhebt und gegen einen inneren Umfang des ersten Außenrads drückt.
3. Harmonisches Pinring-Getriebe nach Aufzählungspunkt 1 oder Aufzählungspunkt 2, wobei ein Umfang der Kurvenscheibe eine ovale Form hat.
4. Harmonisches Pinring-Getriebe nach Aufzählungspunkt 1 oder Aufzählungspunkt 2, wobei ein Umfang der Kurvenscheibe eine kreisförmige Form hat und exzentrisch zu einer Getriebe-Mittelachse angeordnet ist.
5. Harmonisches Pinring-Getriebe nach einem der Aufzählungspunkte 1 bis 4, wobei ein Wälzlager zwischen der Kurvenscheibe und dem Zugmittel angeordnet ist.
6. Harmonisches Pinring-Getriebe nach einem der Aufzählungspunkte 1 bis 5, wobei der Transmitter 5 im Wesentlichen aus Aluminium besteht.
7. Harmonisches Pinring-Getriebe nach einem der Aufzählungspunkte 1 bis 6, wobei der Transmitter einen Ring aufweist, der über Verbindungsstreben mit der Antriebs-Hohlwelle verbunden ist.
8. Harmonisches Pinring-Getriebe mit einer Eingangswelle und einer Ausgangswelle, wobei das Getriebe die folgenden Bestandteile aufweist:
   ein erstes Außenrad, ein Innenrad, das konzentrisch in Bezug auf das erste Außenrad in einer ersten axialen Ebene angeordnet ist,
   ein zweites Außenrad, das in einer zweiten axialen Ebene angeordnet ist,
   ein Zugmittel, das sich zwischen dem ersten Außenrad und dem Innenrad erstreckt,
   einen umlaufenden Transmitter, der das Zugmittel von einem äußeren Umfang des Innenrads abhebt und gegen einen inneren Umfang des ersten Außenrads drückt,
   wobei der Transmitter eine Antriebs-Hohlwelle und eine Kurvenscheibe aufweist, wobei die Kurvenscheibe in einer dritten axialen Ebene angeordnet ist, die sich zwischen der ersten axialen Ebene und der zweiten axialen Ebene befindet, und wobei das erste Außenrad durch einen ersten Außenring gebildet ist und das zweite Außenrad durch einen zweiten Außenring gebildet ist, wobei der erste Ring und er zweite Ring in einen Stützring eingesetzt sind.
9. Harmonisches Pinring-Getriebe nach Aufzählungspunkt 8, wobei der erste Außenring und der zweite Außenring jeweils aus Plastik gefertigt sind.
10. Harmonisches Pinring-Getriebe nach Aufzählungspunkt 8 oder Aufzählungspunkt 9, wobei der erste Außenring und der zweite Außenring jeweils radial nach außen abstehende Zapfen aufweisen, die über den Umfang des jeweiligen Außenrings verteilt sind, und wobei der Stützring dazu passende Ausnehmungen aufweist, in die die Zapfen eingesetzt sind.
11. Harmonisches Pinring-Getriebe nach einem der Aufzählungspunkte 8 bis 10, wobei der Stützring aus Aluminium gefertigt ist.
12. Harmonisches Pinring-Getriebe nach einem der Aufzählungspunkte 8 bis 11, wobei der Stützring zwei Teilringe aufweist, die in axialer Richtung aneinanderstoßen.
13. Harmonisches Pinring-Getriebe nach einem der Aufzählungspunkte 8 bis 12, wobei der erste Außenring, der zweite Außenring und der Stützring zueinander passende Schrauböffnungen aufweisen.
14. Harmonisches Pinring-Getriebe nach Aufzählungspunkt 13, wobei Schrauben durch Schrauböffnungen eines Getriebedeckels und durch die zueinander passenden Schrauböffnungen des ersten Außenrings, des Stützrings und des zweiten Außenrings hindurchgeführt und in einem Gewinde eines Getriebegehäuses des Harmonischen Pinring-Getriebes festgeschraubt sind.
15. Harmonisches Pinring-Getriebe mit einer Eingangswelle und einer Ausgangswelle, wobei das Getriebe die folgenden Bestandteile aufweist:
   - ein erstes Außenrad, ein Innenrad, das konzentrisch in Bezug auf das erste Außenrad in einer ersten axialen Ebene angeordnet ist,

   ein zweites Außenrad, das in einer zweiten axialen Ebene angeordnet ist, ein Zugmittel, das sich zwischen dem ersten Außenrad und dem Innenrad erstreckt,
   einen umlaufenden Transmitter, der das Zugmittel von einem äußeren Umfang des Innenrads abhebt und gegen einen inneren Umfang des ersten Außenrads drückt,
   wobei der Transmitter eine Antriebs-Hohlwelle und eine Kurvenscheibe aufweist, wobei die Kurvenscheibe in einer dritten axialen Ebene angeordnet ist, die sich zwischen der ersten axialen Ebene und der zweiten axialen Ebene befindet,
   und das eine Abtriebs-Hohlwelle aufweist, die in dem Innenrad über einen Motor-Freilauf gelagert ist, und eine Tretwelle, die in der Abtriebs-Hohlwelle durch einen Tretwellen-Freilauf gelagert ist, wobei die Tretwelle an einem äußeren Umfang einen Aufnahmebereich für den Motor-Freilauf und an einem inneren Umfang einen Aufnahmebereich für den Tretwellen-Freilauf aufweist.
16. Harmonisches Pinring-Getriebe nach Aufzählungspunkt 15, wobei der Motor-Freilauf als Klemmrollen-Freilauf ausgebildet ist und der Tretwellen-Freilauf als Sperrklinken-Freilauf ausgebildet ist.
17. Harmonisches Pinring-Getriebe nach Aufzählungspunkt 15 oder Aufzählungspunkt 16,
   wobei sich die Abtriebswelle in axialer Richtung abtriebsseitig von der Antriebs-Hohlwelle erstreckt, wobei ein Kugellager zwischen der Abtriebs-Hohlwelle und der Tretwelle angeordnet ist, und wobei die Abtriebs-Hohlwelle einen Befestigungsbereich für ein Abtriebselement aufweist.
18. Freilaufanordnung mit einem äußeren Klemmrollen-Freilauf und einem inneren Sperrklinken-Freilauf, die aufweist:
   - eine Antriebs-Hohlwelle,
   - eine Abtriebs-Hohlwelle,
   - eine Tretwelle, wobei die Tretwelle, die Abtriebs-Hohlwelle und die Antriebs-Hohlwelle konzentrisch zueinander angeordnet sind, die Abtriebs-Hohlwelle radial innerhalb der Antriebs-Hohlwelle angeordnet ist und die Tretwelle radial innerhalb der Abtriebs-Hohlwelle angeordnet ist,

   wobei die Abtriebs-Hohlwelle an einem inneren Umfang einen treppenförmigen Sperrklinken-Eingriffsbereich aufweist und an einem äußeren Umfang einen treppenförmigen Klemmrollen-Abrollbereich aufweist,
   wobei die Tretwelle einen sternförmigen Aufnahmebereich für Sperrklinken aufweist,
   wobei der sternförmige Aufnahmebereich Sperrklinkensitze und benachbart zu den Sperrklinkensitzen angeordnete Federsitze aufweist.
19. Freilaufanordnung gemäß Aufzählungspunkt 18, wobei sich der treppenförmige Klemmkörper-Abrollbereich auf dem äußeren Umfang der Abtriebs-Hohlwelle und der treppenförmige Sperrklinken-Eingriffsbereich auf dem inneren Umfang der Abtriebs-Hohlwelle im Wesentlichen in der gleichen axialen Ebene befinden.
20. Freilaufanordnung gemäß Aufzählungspunkt 18 oder Aufzählungspunkt 19, wobei die Antriebs-Hohlwelle einen scheibenförmigen Bereich mit einer Außenverzahnung aufweist,
   die an einem äußeren Umfang des scheibenförmigen Bereichs vorgesehen ist.
21. Freilaufanordnung gemäß einem der Aufzählungspunkte 18 bis 20, wobei die Abtriebshohlwelle
   an einem ersten Ende eine ringförmige Verdickung aufweist, und an einem dem ersten Ende gegenüberliegenden zweiten Ende einen Befestigungsbereich für ein Abtriebsmittel aufweist.
22. Freilaufanordnung gemäß einem der Aufzählungspunkte 18 bis 21, wobei der äußere Umfang
   der Abtriebshohlwelle einen Auflagebereich für ein Kugellager aufweist.
23. Freilaufanordnung gemäß einem der Aufzählungspunkte 18 bis 22, wobei der innere Umfang
   der Abtriebshohlwelle einen Auflagebereich für ein Kugellager aufweist.
24. Freilaufanordnung gemäß einem der Aufzählungspunkte 18 bis 23, wobei der innere Umfang der Abtriebshohlwelle an einem Ende ein Innengewinde aufweist.
25. Freilaufanordnung gemäß einem der vorhergehenden 5 Aufzählungspunkte 18 bis 24, die
   weiterhin aufweist:
   Sperrklinken, die in den Sperrklinkensitzen drehbar angeordnet sind und Federelemente,
   die in den Federsitzen angeordnet und mit den Sperrklinken verbunden sind,
   einen Freilaufkäfig mit Stegen und zwischen den Stegen angeordneten Klemmrollen,
   wobei der Freilaufkäfig und die Klemmrollen radial zwischen dem Klemmrollen-Abrollbereich der Abtriebs-Hohlwelle und einem inneren Umfang der Antriebs-Hohlwelle angeordnet sind.
26. Freilaufanordnung gemäß einem der Aufzählungspunkte 18 bis 25, wobei die Sperrklinkensitze zylinderförmig ausgeformt sind, an einem Ende durch eine Wandung abgeschlossen sind und an einem dazu gegenüberliegenden Ende offen sind.
27. Freilaufanordnung gemäß einem der Aufzählungspunkte 18 bis 26, wobei der treppenförmige Klemmkörper-Abrollbereich und der Freilaufkäfig jeweils mindestens zwei Aufnahmebereiche für Federelemente aufweisen und wobei jeweils ein Federelement zwischen einem Aufnahmebereich des Klemmkörper-Abrollbereichs und einem Aufnahmebereich des Freilaufkäfigs angeordnet ist.
28. Freilaufanordnung gemäß einem der Aufzählungspunkte 18 bis 27, wobei die Tretwelle eine Kraftsensor-Einheit aufweist, wobei die Kraftsensor-Einheit eine Kraftmessdose und ein Tretwellen-Kugellager aufweist, wobei die Kraftmessdose auf dem Tretwellen-Kugellager angeordnet ist.
29. Freilaufanordnung nach Aufzählungspunkt 28, wobei die Kraftmessdose einen inneren ringförmigen Bereich aufweist, der über Befestigungslaschen an einem äußeren ringförmigen Bereich befestigt ist, wobei das Tretwellen-Kugellager in den inneren ringförmigen Bereich eingesetzt ist.
30. Freilaufanordnung nach Aufzählungspunkt 29, wobei der innere Bereich und der äußere Bereich der Kraftmessdose radial zueinander versetzt sind, wobei die Befestigungslaschen durch radiale Schlitze seitlich begrenzt sind, und wobei mindestens zwei der Befestigungslaschen einen Dehnmessstreifen aufweisen.
31. Freilaufanordnung nach Aufzählungspunkt 29 oder Aufzählungspunkt 30, wobei eine axiale Dicke des äußeren Rings im Bereich der Befestigungslaschen reduziert ist.
32. Tretwelle für eine Freilaufanordnung, wobei die Tretwelle an einem ersten Ende einen ersten Befestigungsbereich für eine Tretkurbel und an einem dazu gegenüberliegenden zweiten Ende einen zweiten Befestigungsbereich für eine Tretkurbel aufweist,
   und wobei die Tretwelle in der Nähe des ersten Endes einen sternförmigen Aufnahmebereich für Sperrklinken aufweist.
33. Tretwelle nach Aufzählungspunkt 32, wobei der sternförmige Aufnahmebereich Stufen aufweist, wobei die Stufen jeweils eine erste Seitenfläche, eine zweite Seitenfläche, einen in einer vordefinierten Richtung gegenüber der Umfangsrichtung geneigten Sperrklinken-Auflagebereich, der einen Federsitz aufweist, eine Oberseite, die im Wesentlichen zum Umfang parallel ist, und einen Endbereich mit einem Sperrklinkensitz aufweisen, wobei der Sperrklinkensitz zylinderförmig ausgeformt, axial zu einer Seite hin offen und zu einer axial dazu gegenüberliegenden Seite abgeschlossen ist.
34. Harmonisches Pinring-Getriebe mit einer Eingangswelle und einer Ausgangswelle, wobei das Getriebe die folgenden Bestandteile aufweist:
   - ein erstes Außenrad, ein Innenrad, das konzentrisch in Bezug auf das erste Außenrad in einer ersten axialen Ebene angeordnet ist,

   ein zweites Außenrad, das in einer zweiten axialen Ebene angeordnet ist,
   ein Zugmittel, das sich zwischen dem ersten Außenrad und dem Innenrad erstreckt,
   einen umlaufenden Transmitter, der das Zugmittel von einem äußeren Umfang des Innenrads abhebt und gegen einen inneren Umfang des ersten Außenrads drückt,
   wobei der Transmitter eine Antriebs-Hohlwelle und eine Kurvenscheibe aufweist, wobei die Kurvenscheibe in einer dritten axialen Ebene angeordnet ist, die sich zwischen der ersten axialen Ebene und der zweiten axialen Ebene befindet,
   und das eine Abtriebs-Hohlwelle aufweist, die in dem Innenrad über einen Motor-Freilauf gelagert ist, und eine Tretwelle, die in der Abtriebs-Hohlwelle durch einen Tretwellen-Freilauf gelagert ist, wobei die Tretwelle an einem äußeren Umfang einen Aufnahmebereich für den Motor-Freilauf und an einem inneren Umfang einen Aufnahmebereich für den Tretwellen-Freilauf aufweist.
35. Harmonisches Pinring-Getriebe nach Aufzählungspunkt 34, wobei der Motor-Freilauf als Klemmrollen-Freilauf ausgebildet ist und der Tretwellen-Freilauf als Sperrklinken-Freilauf ausgebildet ist.
36. Harmonisches Pinring-Getriebe nach Aufzählungspunkt 34 oder Aufzählungspunkt 35,
   wobei sich die Abtriebswelle in axialer Richtung abtriebsseitig von der Antriebs-Hohlwelle erstreckt, wobei ein Kugellager zwischen der Abtriebs-Hohlwelle und der Tretwelle angeordnet ist, und wobei die Abtriebs-Hohlwelle einen Befestigungsbereich für ein Abtriebselement aufweist.
37. Harmonisches Pinring-Getriebe mit einer Eingangswelle und einer Ausgangswelle, wobei das Getriebe die folgenden Bestandteile aufweist:
   - ein erstes Außenrad, ein Innenrad, das konzentrisch in Bezug auf das erste Außenrad in einer ersten axialen Ebene angeordnet ist,

   ein zweites Außenrad, das in einer zweiten axialen Ebene angeordnet ist,
   ein Pinring mit Pins, der sich zwischen dem ersten Außenrad und dem Innenrad erstreckt,
   einen umlaufenden Transmitter, der die Pins des Pinrings von einem äußeren Umfang des Innenrads abhebt und gegen einen inneren Umfang des ersten Außenrads drückt,
   wobei der Transmitter eine Antriebs-Hohlwelle und eine Kurvenscheibe aufweist, wobei die Kurvenscheibe in einer dritten axialen Ebene angeordnet ist, die sich zwischen der ersten axialen Ebene und der zweiten axialen Ebene befindet,
   und wobei der Pinring aus einem Stück ausgebildet ist und aus Metall besteht, wobei die Pins durch Fortsätze gebildet werden, die von zwei gegenüberliegenden Seiten eines mittleren Bereichs des Pinrings hervorstehen, wobei der mittlere Bereich eine innere Auflagefläche zur Auflage auf einem Lager aufweist.
38. Harmonisches Pinring Getriebe gemäß Aufzählungspunkt 37, wobei die Fortsätze an einer ersten Seite der zwei gegenüberliegen Seiten zylinderförmig ausgebildet sind und wobei die Fortsätze an einer zweiten der zwei gegenüberliegenden Seiten teilweise zylinderförmig ausgebildet sind, wobei ein zylinderförmig ausgebildeter Bereich sich in radialer Richtung an der Außenseite des Pinrings befindet.
39. Harmonisches Pinring Getriebe gemäß Aufzählungspunkt 37, wobei die Fortsätze an einer ersten Seite der zwei gegenüberliegen Seiten einen inneren abgerundeten Eingriffs-bereich und einen äußeren abgerundeten Eingriffsbereich aufweisen, und wobei die Fortsätze an einer zweiten der zwei gegenüberliegenden Seiten einen äußeren abgerundeten Eingriffsbereich aufweisen.
40. Harmonisches Pinring Getriebe gemäß einem der Aufzählungspunkte 37 bis 39, wobei ein Lager zwischen der Kurvenscheibe und dem Pinring angeordnet ist, und wobei der Pinring an einer Innenseite einen Absatz zur Abstützung des Lagers aufweist.
41. Pinring für ein harmonisches Pinring Getriebe, der aus einem Stück ausgebildet ist und
   aus Metall besteht, wobei der Pinring Pins aufweist, die durch Fortsätze gebildet werden, die von zwei gegenüberliegenden Seiten eines mittleren Bereichs des Pinrings hervorstehen,
   wobei der mittlere Bereich eine innere Auflagefläche zur Auflage auf einem Lager äußere Auflagefläche aufweist.
42. Pinring nach Aufzählungspunkt 41, wobei die Fortsätze an einer ersten Seite der zwei gegenüberliegen Seiten zylinderförmig ausgebildet sind und wobei die Fortsätze an einer zweiten der zwei gegenüberliegenden Seiten teilweise zylinderförmig ausgebildet sind,
   wobei ein zylinderförmig ausgebildeter Bereich sich in radialer Richtung an der Außenseite des Pinrings befindet.
43. Pinring nach Aufzählungspunkt 41, wobei die Fortsätze an einer ersten Seite der zwei gegenüberliegen Seiten einen inneren abgerundeten Eingriffsbereich und einen äußeren abgerundeten Eingriffsbereich aufweisen,
   und wobei die Fortsätze an einer zweiten der zwei gegenüberliegenden Seiten einen äußeren abgerundeten Eingriffsbereich aufweisen.
44. Pinring nach Aufzählungspunkt 41, wobei sich zwischen den Fortsätzen an der ersten der gegenüberliegenden zwei Seiten jeweils ein Steg befindet, wobei eine äußere Begrenzungslinie der Fortsätze glatt in eine äußere Begrenzungslinie des Stegs übergeht.
45. Harmonisches Pinring Getriebe gemäß einem der Aufzählungspunkte 41 bis 44, wobei
   ein Lager zwischen der Kurvenscheibe und dem Pinring a geordnet ist, und wobei der Pinring an einer Innenseite einen Absatz zur Abstützung des Lagers aufweist.
46. Harmonisches Pinring-Getriebe mit einer Eingangswelle und einer Ausgangswelle, wobei das Getriebe die folge den Bestandteile aufweist:
   - ein erstes Außenrad, ein Innenrad, das konzentrisch in Bezug auf das erste Außenrad in einer ersten axialen Ebene angeordnet ist,

   ein zweites Außenrad, das in einer zweiten axialen Ebene angeordnet ist,
   ein Zugmittel, das sich zwischen dem ersten Außenrad und dem Innenrad erstreckt,
37. Harmonisches Pinring-Getriebe mit einer Eingangswelle und einer Ausgangswelle, wobei
   das Getriebe die folgenden Bestandteile aufweist:
      - ein erstes Außenrad, ein Innenrad, das konzentrisch in Bezug auf das erste Außenrad in einer ersten axialen Ebene angeordnet ist,
   ein zweites Außenrad, das in einer zweiten axialen Ebene angeordnet ist,
   ein Pinring mit Pins, der sich zwischen dem ersten Außenrad und dem Innenrad erstreckt,
   einen umlaufenden Transmitter, der die Pins des Pinrings von einem äußeren Umfang des Innenrads abhebt und gegen einen inneren Umfang des ersten Außenrads drückt,
   wobei der Transmitter eine Antriebs-Hohlwelle und eine Kurvenscheibe aufweist, wobei die Kurvenscheibe in einer dritten axialen Ebene angeordnet ist, die sich zwischen der ersten axialen Ebene und der zweiten axialen Ebene befindet,
   und wobei der Pinring aus einem Stück ausgebildet ist und aus Metall besteht, wobei die Pins durch Fortsätze gebildet werden, die von zwei gegenüberliegenden Seiten eines mittleren Bereichs des Pinrings hervorstehen, wobei der mittlere Bereich eine innere Auflagefläche zur Auflage auf einem Lager aufweist.
38. Harmonisches Pinring Getriebe gemäß Aufzählungspunkt 37, wobei die Fortsätze an einer ersten Seite der zwei gegenüberliegen Seiten zylinderförmig ausgebildet sind und wobei die Fortsätze an einer zweiten der zwei gegenüberliegenden Seiten teilweise zylinderförmig ausgebildet sind, wobei ein zylinderförmig ausgebildeter Bereich sich in radialer Richtung an der Außenseite des Pinrings befindet.
39. Harmonisches Pinring Getriebe gemäß Aufzählungspunkt 37, wobei die Fortsätze an einer ersten Seite der zwei gegenüberliegen Seiten einen inneren abgerundeten Eingriffsbereich und einen äußeren abgerundeten Eingriffsbereich aufweisen,
   und wobei die Fortsätze an einer zweiten der zwei gegenüberliegenden Seiten einen äußeren abgerundeten Eingriffsbereich aufweisen.
40. Harmonisches Pinring Getriebe gemäß einem der Aufzählungspunkte 37 bis 39, wobei ein Lager zwischen der Kurvenscheibe und dem Pinring angeordnet ist, und wobei der Pinring an einer Innenseite einen Absatz zur Abstützung des Lagers aufweist.
41. Pinring für ein harmonisches Pinring Getriebe, der aus einem Stück ausgebildet ist und aus Metall besteht, wobei der Pinring Pins aufweist, die durch Fortsätze gebildet werden, die von zwei gegenüberliegenden Seiten eines mittleren Bereichs des Pinrings hervorste-hen, wobei der mittlere Bereich eine innere Auflagefläche zur Auflage auf einem Lager äußere Auflagefläche aufweist.
42. Pinring nach Aufzählungspunkt 41, wobei die Fortsätze an einer ersten Seite der zwei gegenüberliegen Seiten zylinderförmig ausgebildet sind und wobei die Fortsätze an einer zweiten der zwei gegenüberliegenden Seiten teilweise zylinderförmig ausgebildet sind, wobei ein zylinderförmig ausgebildeter Bereich sich in radialer Richtung an der Außen-seite des Pinrings befindet.
43. Pinring nach Aufzählungspunkt 41, wobei die Fortsätze an einer ersten Seite der zwei gegenüberliegen Seiten einen inneren abgerundeten Eingriffsbereich und einen äußeren abgerundeten Eingriffsbereich aufweisen,
   und wobei die Fortsätze an einer zweiten der zwei gegenüberliegenden Seiten einen äußeren abgerundeten Eingriffsbereich aufweisen.
44. Pinring nach Aufzählungspunkt 41, wobei sich zwischen den Fortsätzen an der ersten der gegenüberliegenden zwei Seiten jeweils ein Steg befindet, wobei eine äußere Begrenzungslinie der Fortsätze glatt in eine äußere Begrenzungslinie des Stegs übergeht.
45. Harmonisches Pinring Getriebe gemäß einem der Aufzählungspunkte 41 bis 44, wobei ein Lager zwischen der Kurvenscheibe und dem Pinring angeordnet ist, und wobei der Pinring an einer Innenseite einen Absatz zur Abstützung des Lagers aufweist.
46. Harmonisches Pinring-Getriebe mit einer Eingangswelle und einer Ausgangswelle, wobei das Getriebe die folgenden Bestandteile aufweist:
   - ein erstes Außenrad, ein Innenrad, das konzentrisch in Bezug auf das erste Außenrad in einer ersten axialen Ebene angeordnet ist,

   ein zweites Außenrad, das in einer zweiten axialen Ebene angeordnet ist,
   ein Zugmittel, das sich zwischen dem ersten Außenrad und dem Innenrad erstreckt,
   einen umlaufenden Transmitter, der das Zugmittel von einem äußeren Umfang des In-nenrads abhebt und gegen einen inneren Umfang des ersten Außenrads drückt,
   wobei der Transmitter eine Antriebs-Hohlwelle und eine Kurvenscheibe aufweist, wobei die Kurvenscheibe in einer dritten axialen Ebene angeordnet ist, die sich zwischen der ersten axialen Ebene und der zweiten axialen Ebene befindet,
   wobei eine Tretwelle radial innerhalb der Abtriebswelle angeordnet ist, und wobei die Tretwelle über ein antriebsseitiges Tretwellen-Kugellager und eine Kraftmessdose in dem Motorgehäuse gelagert ist.
47. Harmonisches Pinring-Getriebe nach Aufzählungspunkt 46, wobei die Kraftmessdose einen inneren ringförmigen Bereich aufweist, der über Befestigungslaschen an einem äußeren ringförmigen Bereich befestigt ist, wobei das Tretwellen-Kugellager in den inne-ren ringförmigen Bereich eingesetzt ist, und wobei der äußere ringförmige Bereich in ei-nen zylindrischen Bereich des Motorgehäuses eingesetzt ist.
48. Harmonisches Pinring-Getriebe gemäß einem der Aufzählungspunkte 46 bis 47, wobei eine Wellenfeder zwischen der Kraftmessdose und dem antriebsseitigen Rotor-Kugellager angeordnet ist.
49. Harmonisches Pinring-Getriebe mit einer Eingangswelle und einer Ausgangswelle, wobei das Getriebe die folgenden Bestandteile aufweist:
   - ein erstes Außenrad, ein Innenrad, das konzentrisch in Bezug auf das erste Außenrad in einer ersten axialen Ebene angeordnet ist,

   ein zweites Außenrad, das in einer zweiten axialen Ebene angeordnet ist,
   ein Zugmittel, das sich zwischen dem ersten Außenrad und dem Innenrad erstreckt,
   einen umlaufenden Transmitter, der das Zugmittel von einem äußeren Umfang des Innenrads abhebt und gegen einen inneren Umfang des ersten Außenrads drückt,
   wobei der Transmitter eine Antriebs-Hohlwelle und eine Kurvenscheibe aufweist, wobei die Kurvenscheibe in einer dritten axialen Ebene angeordnet ist, die sich zwischen der ersten axialen Ebene und der zweiten axialen Ebene befindet, wobei eine Tretwelle radial innerhalb der Ausgangswelle angeordnet ist und wobei ferner ein Planeten-getriebe und ein Tretwellen-Freilauf im Kraftfluss zwischen der Tretwelle und der Ausgangswelle angeordnet sind.
50. Harmonisches Pinring Getriebe nach Aufzählungspunkt 49, wobei ein Planetenträger des Planetengetriebes mit der Tretwelle verbunden ist, ein Hohlrad des Planetengetriebes einen Verbindungsbereich zum Verbindung mit einem Getriebegehäuse aufweist, ein Sonnenrad des Planetengetriebes auf der Tretwelle gelagert ist und wobei der Tretwellen-Freilauf zwischen einer mit dem Sonnenrad verbundenen Hohlwelle und der Ausgangswelle angeordnet ist.
51. Harmonisches Pinring Getriebe nach Aufzählungspunkt 49, wobei der Tretwellen-Freilauf zwischen der Kurbelwelle und einem Planetenträger des Planetengetriebes angeordnet ist, wobei ein Hohlrad des Planetengetriebes in dem harmonischen Getriebe drehbar gelagert ist und wobei ein Sonnenrad des Planetengetriebes zur Befestigung an einem stationären Gehäuseteil ausgebildet ist.
52. Spannwellen-Getriebe, wobei das Spannwellen-Getriebe die folgenden Bestandteile aufweist:
   - ein Außenrad mit einer Innenverzahnung, wobei das Außenrad einen Befestigungsbereich zur Befestigung an einem Getriebegehäuse aufweist,
   - eine Spannwelle mit einer Außenverzahnung, wobei die Spannwelle konzentrisch in Bezug auf das Außenrad in einer axialen Ebene angeordnet ist,

   einen umlaufenden Transmitter, der die Spannwelle gegen die Innenverzahnung des Außenrads drückt,
   wobei der Transmitter eine Antriebs-Hohlwelle und eine Kurvenscheibe aufweist, wobei auf einem Umfang der Kurvenscheibe ein Kugellager angeordnet ist,
   wobei ein Querschnitt der Zahnköpfe der Außenverzahnung der Spannwelle im Wesentlichen einem Kreisausschnitt entspricht,
   und wobei die Innenverzahnung des Außenrads in Bezug auf eine Achse des Außenrads im Wesentlichen durch eine äußere Äquidistante zu der durch die Formeln x(t) = r1*cost(t) + r2*cos((n+1)*t) + r3*cos((n+3)*t) und y(t) = r1*sin(t)-r2*sin((n+1)*t) + r3*sin((n+3)*t) festgelegten Radkurve bestimmt ist, wobei n+1 die Anzahl der Zähne der Innenverzahnung des Außenrads ist, wobei die Radien r1, r2 und r3 größer Null sind, und wobei für das Größenverhältnis der Radien r2 > r3 und r1 > r2 + r3 gilt.
53. Spannwellen-Getriebe nach Aufzählungspunkt 52, wobei die Spannwelle in einer Topf-form ausgebildet ist wobei am Grund der Topfform ein Befestigungsbereich zum Befestigen einer Abtriebswelle ausgebildet ist.
54. Spannwellen Getriebe nach Aufzählungspunkt 53, wobei am Grund der Topfform eine zentrale kreisförmige Öffnung ausgebildet ist, und wobei der Befestigungsbereich der Spannwelle Befestigungslöcher aufweist, die um die zentrale kreisförmige Öffnung her-um angeordnet sind.
55. Spannwellen-Getriebe nach Aufzählungspunkt 52, wobei die Spannwelle die Form eines Kreiszylinders hat, und wobei ein zweites Außenrad aufweist, das einen Befestigungsbereich zum Befestigen einer Abtriebswelle aufweist, wobei die Innenverzahnung des Außenrads durch die gleiche Konstruktion bestimmt ist wie die Innenverzahnung des ersten Außenrads.
56. Spannwellen-Getriebe, wobei das Spannwellen-Getriebe die folgenden Bestandteile aufweist:
   - ein Außenrad mit einer Innenverzahnung, wobei das Außenrad einen Befestigungsbereich zu Befestigung an einem Getriebegehäuse aufweist,
   - eine Spannwelle mit einer Außenverzahnung, wobei die Spannwelle konzentrisch in Bezug auf das Außenrad in einer axialen Ebene angeordnet ist,

   wobei ein Querschnitt der Zahnköpfe der Außenverzahnung der Spannwelle im Wesentlichen einem Kreisausschnitt entspricht,
   einen umlaufenden Transmitter, der die Spannwelle gegendie Innenverzahnung des Außenrads drückt,
   wobei der Transmitter eine Antriebs-Hohlwelle und eine Kurvenscheibe aufweist,
   wobei die Zahnoberfläche der Innenverzahnung des Außenrads durch einen radialen Abstand von einer Mittelachse des Innenrads in Abhängigkeit von einem Zykelwinkel bestimmt ist,
   wobei der radiale Abstand von der Mittelachse seinerseits durch eine innere Äquidistante zu einer Radkurve bestimmt ist, wobei ein Ort auf der Radkurve jeweils durch die Vektorsumme eines Zykelvektors, eines ersten Epizykelvektors und eines zweiten Epizykelvektors bestimmt ist, wobei ein Anfangspunkt des Zykelvektors auf der Mittel-achse liegt, ein Anfangspunkt des ersten Epizykelvektors im Endpunkt des Zykelvektors liegt und ein Anfangspunkt des zweiten Epizykelvektors im Endpunkt des ersten Epizykelvektors liegt,
   und wobei ein Epizykelwinkel des ersten Epizykelvektors (n + 1)-mal so groß ist wie der Zykelwinkel und ein Epizykelwinkel des zweiten Epizykelvektors (n + 3)-mal so groß ist wie der Zykelwinkel, wobei n eine Anzahl von Pins des harmonischen Pinring-Getriebes ist, die mindestens vier ist, und wobei eine Länge des Zykelvektors größer ist als die Summe der Längen des ersten Epizykelvektors und des zweiten Epizykelvektors, und eine Länge des ersten Epizykelvektors größer ist als eine Länge des zweiten Epizykelvektors.
57. Zweistufiges Untersetzungsgetriebe, wobei das zweistufige Untersetzungsgetriebe die folgenden Bestandteile aufweist:
   - ein stationäres Außenrad mit einer ersten Innenverzahnung, wobei das Außenrad einen Befestigungsbereich zur Befestigung an einem Getriebegehäuse aufweist,
   - ein drehbares Außenrad mit einer zweiten Innenverzahnung, wobei das Außenrad einen Befestigungsbereich zu Befestigung an einer Abtriebswelle aufweist,
   - einen zweigeteilten einstückigen Pinring, wobei der zweigeteilte einstückige Pinring eine erste Außenverzahnung und eine zweite Außenverzahnung aufweist, wobei die erste Außenverzahnung des zweigeteilten einstückigen Pinrings in die Innenverzahnung des stationären Außenrads eingreift, und wobei die zweite Außenverzahnung des zweigeteilten einstückigen Pinrings in die Innenverzahnung des drehbaren Außenrads eingreift,
   - einen umlaufenden Transmitter, der den zweigeteilten einstückigen Pinring gegen die Innenverzahnung des stationären Außenrads und gegen die Innenverzahnung des dreh-baren Außenrads drückt.
58. Zweistufiges Untersetzungsgetriebe nach Aufzählungspunkt 57, wobei die Anzahl der Zähne der Innenverzahnung des stationären Außenrads größer ist als die Anzahl der Zähne der ersten Außenverzahnung, und die Anzahl der Zähne der Innenverzahnung des drehbaren Außenrads größer ist als die Anzahl der Zähne der zweiten Außenverzah-nung, und wobei die Anzahl der Zähne des stationären Außenrads größer ist als die Anzahl der Zähne des drehbaren Außenrads und die Anzahl der Zähne der ersten Außenverzahnung größer ist als die Anzahl der Zähne der zweiten Außenverzahnung.
59. Zweistufiges Untersetzungsgetriebe nach Aufzählungspunkt 57 oder Aufzählungspunkt 58, wobei der Transmitter einen exzentrisch zur Achse des stationären Außenrads einen Kreisring aufweist.
60. Zweistufiges Untersetzungsgetriebe nach einem der Aufzählungspunkte 57 bis 59, wobei ein Querschnitt der Zahnköpfe der ersten Außenverzahnung und ein Querschnitt der Zahnköpfe der zweiten Außenverzahnung im Wesentlichen einem Kreisausschnitt entspricht.
61. Zweistufiges Untersetzungsgetriebe nach einem der Aufzählungspunkte 57 bis 60, wobei ein Querschnitt der Zahnköpfe der ersten Außenverzahnung und ein Querschnitt der Zahnköpfe der zweiten Außenverzahnung im Wesentlichen einer Äquidistante zu der durch die Formel x(t) = r1*cos(t)+r2*cos(nt) und y(t)=r1*sin(t)+r2*sin(nt) bestimmten Radkurve entspricht, wobei für die Radien r1, r2 gilt: r1 > 0, r2 > 0 und r1 > r2.
62. Zweistufiges Untersetzungsgetriebe nach einem der Aufzählungspunkt 57 bis 61, wobei ein Querschnitt der Zahnköpfe der ersten Außenverzahnung und ein Querschnitt der Zahnköpfe der zweiten Außenverzahnung im Wesentlichen einer Äquidistante zu der durch die Formel x(t) = r1*cos(t) +r2*cos(nt) und y(t)=r1*sin(t)-r2*sin(nt) bestimmten Radkurve entspricht, wobei für die Radien r1, r2 gilt: r1 > 0, r2 > 0 und r1 > r2.
63. Eine Kraftmessdose zur Bestimmung einer radialen Kraft auf eine Kurbelwelle, die die folgenden Merkmale aufweist:
   - eine Aufnahmehülse zur Aufnahme eines Rings eines Lagers,
   - einen Befestigungsring zur Befestigung der Kraftmessdose in einem Getriebegehäuse,
   - Axialstützbereiche, die an dem Befestigungsring zur axialen Abstützung des Rings des Lagers vorgesehen sind,
   - Messbereiche, die zur Aufnahme von radialen Kräften der Aufnahmehülse vorgesehen sind, und die die Aufnahmehülse mit dem Befestigungsring verbinden, wobei an mindestens zwei der Messbereiche Dehnungssensoren befestigt sind.
64. Freilaufanordnung mit einem äußeren Getriebe-Freilauf und einem inneren Tretwellen-Freilauf, die aufweist:
   - eine Antriebs-Hohlwelle,
   - eine Abtriebs-Hohlwelle,
   - eine Tretwelle, wobei die Tretwelle, die Abtriebs-Hohlwelle und die Antriebs-Hohlwelle konzentrisch zueinander angeordnet sind, die Abtriebs-Hohlwelle radial innerhalb der Antriebs-Hohlwelle angeordnet ist und die Tretwelle radial innerhalb der Abtriebs-Hohlwelle angeordnet ist, wobei der Tretwellen-Freilauf zwischen der Tretwelle und der Abtriebs-Hohlwelle angeordnet ist und wobei der Getriebe-Freilauf gegenüber dem Tretwell-Freilauf auf der Abtriebs-Hohlwelle angeordnet ist, und wobei die Abtriebs-Hohlwelle an einer Innenseite und an einer Außenseite im Bereich des jeweiligen Freilaufs angepasste Bereiche aufweist.
65. Einstückiger Pinring aus Metall, wobei ein Pin-Haltering und eine Anordnung aus Pins, die in axialer Richtung an zwei gegenüberliegenden Seiten von dem Pin-Haltering hervorstehen, aus einem Stück gefertigt ist.
66. Einstückiger Pinring nach Aufzählungspunkt 65, wobei die Pins in Umfangsrichtung miteinander verbunden sind.
67. Einstückiger Pinring nach Aufzählungspunkt 65 oder 66 wobei die Pins an einer ersten der beiden gegenüberliegenden Seiten als halbe Pins ausgebildet sind, die zum Eingriff eine Innenverzahnung geeignet sind, und wobei die Pins and einer zweiten der gegen-überliegenden Seite als ganze Pins ausgebildet sind, die zum Eingriff in eine Innverzahnung und zum Eingriff in eine der Innenverzahnung gegenüberliegende Außenverzahnung geeignet sind.
68. Einstückiger Pinring aus Metall, wobei der einstückige Pin-Haltering auf einer Innenseite einen glatten inneren Umfang aufweist und auf einer Außenseite abgerundete Ausbuchtungen aufweist, die aus einem Stück mit dem Pin-Haltering gefertigt sind.
69. Einstückiger Pin-Haltering nach Aufzählungspunkt 68, wobei zumindest ein Kopfbereich der abgerundeten Ausbuchtungen einen halbkreisförmigen Querschnitt aufweist.
70. Stützring-Anordnung für ein Untersetzungsgetriebe mit einem ersten Außenrad und einem zweiten Außenrad, das einen Stützring, ein erstes Außenrad mit einer ersten Innen-verzahnung und ein zweites Außenrad mit einer zweiten Innenverzahnung aufweist, wobei das erste Außenrad und das zweite Außenrad an gegenüberliegenden Seiten in den Stützring eingesetzt sind, und wobei der Stützring einen Befestigungsbereich zur Be-festigung an einem Getriebegehäuse aufweist.
71. Stützring Anordnung nach Aufzählungspunkt 70,
   wobei zumindest das erste Außenrad und das zweite Außenrad aus Plastik gefertigt sind.
72. Stützring-Anordnung nach einem der Aufzählungspunkt 71 oder 72, wobei das erste Außenrad und das zweite Außenrad jeweils über eine Zapfen-Nut Verbindung mit dem Stützrad verbunden sind.
73. Einstückiges Rotor-Transmitter Element für ein Untersetzungsgetriebe, das eine Hohlwelle aufweist, die an einer ersten Seite einen Befestigungsbereich zum Befestigen eines Rotor-Paketes aufweist, und an einer zu der ersten Seite gegenüberliegenden zweiten Seite eine Kurvenscheibe aufweist, wobei eine äußerer Umfang der Kurvenscheibe als Aufnahmebereich für ein Kugellager ausgebildet ist.
74. Einstückiges Rotor-Transmitter Element nach Aufzählungspunkt 73, wobei das einstückige Rotor-Transmitter-Element aus Aluminium gefertigt ist.
75. Einstückiges Rotor-Transmitter Element nach Aufzählungspunkt 73 oder 74, wobei die Hohlwelle so dimensioniert ist, dass eine Tretwelle durch die Hohlwelle hindurchgeführt werden kann.
76. Einstückiges Rotor-Transmitter Element nach einem der Aufzählungspunkte 73 bis 75, wobei die Kurvenscheibe einen zur Mittelachse der Hohlwelle exzentrisch angeordnete kreisförmigen Umfang aufweist.
77. Einstückiges Rotor-Transmitter Element nach einem der Aufzählungspunkte 73 bis 75, wobei die Kurvenscheibe einen zur Mittelachse der Hohlwelle einen ovalen Umfang aufweist.
78. Antriebswelle mit einem auf der Antriebswelle angeordneten Planetengetriebe, wobei ein Planetenträger des Planetengetriebes fest mit der Antriebswelle verbunden ist, ein Hohlrad des Planetengetriebes einen Befestigungsbereich zum Befestigen an einem Getriebegehäuse und einen Aufnahmebereich für einen Drehmomentsensor aufweist, und ein Sonnenrad des Planetengetriebes als Hohlrad ausgebildet ist, dass konzentrisch zu der Antriebswelle angeordnet ist, und wobei das Sonnenrad mit einer Abtriebs-Hohlwelle des Planetengetriebes verbunden ist, die drehbar auf der Antriebswelle gelagert ist.
79. Antriebswelle mit einem auf der Antriebswelle angeordneten Planetengetriebe, wobei ein Planetenträger des Planetengetriebes über einen Freilauf auf der Antriebswelle gelagert ist, ein Sonnenrad des Planetengetriebes einen Befestigungsbereich zum Befestigen an einem Getriebegehäuse und einen Aufnahmebereich für einen Drehmomentsensor auf-weist, und ein Hohlrad des Planetengetriebes einen Aufnahmebereich für ein Kugellager zum Abstützen an einem Getriebegehäuse aufweist.
80. Antriebswelle mit einem auf der Antriebswelle angeordneten Planetengetriebe, wobei ein Planetenträger des Planetengetriebes einen Befestigungsbereich zum Befestigen an einem Getriebegehäuse aufweist, wobei eine Hohlwelle des Planetengetriebes fest mit der Antriebswelle verbunden ist, und wobei ein Sonnenrad des Planetengetriebes als eine Hohlwelle ausgebildet ist, die konzentrisch zur Antriebswelle drehbar auf der Antriebswelle angeordnet ist.
81. Zykloid-Getriebe, wobei das Zykloid-Getriebe die folgenden Bestandteile aufweist:
   - ein Getriebegehäuse,
   - ein Außenrad mit einer Innenverzahnung, das an dem Getriebegehäuse befestigt ist,
   - eine konzentrisch zu dem Außenrad angeordnete Eingangswelle, wobei die Eingangswelle eine antriebsseitige Exzenterscheibe, auf der ein erstes Kugellager angeordnet ist und eine abtriebsseitige Exzenterscheibe, auf der ein zweites Kugellager angeordnet ist, aufweist,
   - ein antriebsseitiges Innenrad mit einer Außenverzahnung, das auf dem ersten Kugellager gelagert ist und ein abtriebsseitiges Innenrad mit einer Außenverzahnung, das auf dem zweiten Kugellager gelagert ist,
   wobei das antriebsseitige Innenrad und das abtriebsseitige Innenrad innerhalb des Außenrads angeordnet sind und wobei die Außenverzahnungen des antriebseitigen Innenrads und des abtriebsseitigen Außenrads jeweils in die Innenverzahnung des Außenrads eingreifen.
82. Zykloid-Getriebe nach Aufzählungspunkt 81, wobei das Zykloidgetriebe eine Kurbelwelle aufweist, die innerhalb der Eingangswelle gelagert ist, und eine Kraftmessdose gemäß Aufzählungspunkt 63, die antriebsseitig auf der Kurbelwelle gelagert ist.
83. Zykloid-Getriebe nach einem der Aufzählungspunkte 81 oder 82, wobei die Eingangswelle als ein einstückiges Rotor-Transmitterelement gemäß einem der Aufzählungspunkte 73 bis 77 ausgebildet ist.
84. Zykloid-Getriebe nach einem der Aufzählungspunkte 81 oder bis 83,
   wobei das Zykloidgetriebe eine Kurbelwelle aufweist, die innerhalb der Eingangswelle gelagert ist, und wobei die Kurbelwelle Planetengetriebe gemäß der Aufzählungspunkte 78 bis 80 aufweist, wobei die Kurbelwelle die Antriebswelle des Planetengetriebes bildet.
85. Zykloid-Getriebe nach einem der Ansprüche 81 bis 84, wobei auf der Eingangswelle abtriebsseitig von der abtriebsseitigen Exzenterscheibe ein drittes Kugellager angeordnet ist, wobei auf dem dritten Kugellager eine Abtriebsscheibe angeordnet ist, wobei die Abtriebsscheibe Mitnehmerbolzen aufweist, die in Öffnungen des antriebsseitigen Innenrads und des abtriebseitigen Innenrads eingreifen, wobei radial innen an der Abtriebsscheibe eine Ausgangswelle ausgeformt ist.
86. Zykloid-Getriebe nach Aufzählungspunkt 85, wobei radial innen an der Abtriebsscheibe eine Ausgangswelle ausgeformt ist, wobei das dritte Kugellager auf einer inneren Schulter der Ausgangswelle angeordnet ist, und wobei ein Innenrad-Kugellager diagonal gegenüberliegend zu dem dritten Kugellager auf einer äußeren Schulter der Ausgangswelle angeordnet ist, wobei das Innenrad-Kugellager an dem Getriebegehäuse abgestützt ist.
87. Zykloid-Getriebe nach einem der Ansprüche 81 bis 83, wobei zumindest eines der Innenräder eine erste Verzahnung und eine zweite Außenverzahnung aufweist, und wobei das Zykloid-Getriebe ein drehbares Außenrad mit einer Innenverzahnung aufweist, wobei die zweite Außenverzahnung in die Innenverzahnung des drehbaren Außenrads eingreift, und wobei das drehbare Außenrad einen Befestigungsbereich zur Befestigung einer Abtriebswelle aufweist.

## Patentansprüche

1. Harmonisches Pinring Getriebe, das aufweist
- ein erstes Rad mit einer ersten Verzahnung und
- ein zweites Rad mit einer zweiten Verzahnung,
- einen Pinring mit runden Eingriffsbereichen,
- einen umlaufenden Transmitter zum Rakeln der Eingriffsbereiche des Pinrings in die erste Verzahnung des ersten Rads und in die zweite Verzahnung des zweiten Rads, wobei das erste Rad, der Transmitter und das zweite Rad konzentrisch zueinander angeordnet sind und der Transmitter radial innerhalb des Pinrings angeordnet ist, und wobei der Pinring zwischen dem ersten Rad und dem zweiten Rad angeordnet ist, wobei der Transmitter eine exzentrisch zu einer Getriebemittelachse angeordnete Transmitterscheibe aufweist, wobei die erste Verzahnung des ersten Rads und die zweite Verzahnung des zweiten Rads gemäß einer Epizykelkonstruktion geformt ist,
wobei Orte auf der jeweiligen Zahnoberfläche der ersten Verzahnung bzw. der zweiten Verzahnung jeweils durch einen radialen Abstand von der Getriebemittelachse in Abhängigkeit von einem Zykelwinkel bestimmt sind,
wobei der radiale Abstand seinerseits durch eine Äquidistante zu einer Radkurve bestimmt ist,
wobei Orte auf der Radkurve jeweils durch die Vektorsumme eines Zykelvektors und eines Epizykelvektors bestimmt sind, wobei ein Anfangspunkt des Zykelvektors auf der Getriebemittelachse liegt und ein Anfangspunkt des Epizykelvektors im Endpunkt des Zykelvektors liegt, wobei ein Epizykelwinkel des Epizykelvektors n-mal so groß ist wie der Zykelwinkel und eine Länge des Zykelvektors größer als eine Länge des Epizykelvektors
ist, wobei n eine Anzahl der runden Eingriffsbereiche des harmonischen Pinring-Getriebes ist, die mindestens drei ist.

2. Harmonisches Pinring Getriebe nach Anspruch 1, wobei das erste Rad ein Innenrad
mit einer Außenverzahnung ist und das zweite Rad ein Außenrad mit einer Innenverzahnung
ist, wobei bei der Außenverzahnung des Innenrads der Epizykelwinkel in derselben Richtung wie der Zykelwinkel gemessen wird und die Äquidistante eine innere Äquidistante ist,
und wobei bei der Innenverzahnung des Außenrads der Epizykelwinkel in entgegengesetzter Richtung zu dem Zykelwinkel gemessen wird und die Äquidistante eine äußere Äquidistante ist.

3. Harmonisches Pinring Getriebe nach Anspruch 1, wobei das erste Rad und das zweite Rad jeweils ein Außenrad mit einer Innenverzahnung ist,
wobei bei der Innenverzahnung der beiden Außenräder der Epizykelwinkel in entgegengesetzter Richtung zu dem Zykelwinkel gemessen wird und die Äquidistante eine äußere Äquidistante ist.

4. Harmonisches Pinring Getriebe nach Anspruch 3,
wobei die jeweilige Äquidistante
eine Äquidistante im Abstand der Summe eines Radius der runden Eingriffsbereiche und einem Korrekturwert ist, wobei der Korrekturwert von einem Getriebespiel abhängt.

5. Harmonisches Pinring Getriebe nach Anspruch 3 oder 4, wobei das harmonische
Pinring-Getriebe ein Wälzlager aufweist, das auf der Transmitterscheibe aufliegt, wobei
der Zykelradius gleich dem halben Durchmesser des Wälzlagers ist.

6. Harmonisches Pinring Getriebe nach Anspruch 3 oder 4, wobei der Zykelradius gleich dem halben Durchmesser der Transmitterscheibe ist.

7. Harmonisches Pinring Getriebe nach einem der Ansprüche 3 bis 6, wobei der Epizykelradius gleich einem halben Exzenterversatz ist, um den die Transmitterscheibe gegenüber der Getriebemittelachse versetzt ist.

8. Harmonisches Pinring-Getriebe nach einem der Ansprüche 3 bis 7, wobei eine Antriebswelle mit dem Transmitter verbunden ist.

9. Harmonisches Pinring-Getriebe nach Anspruch 8, wobei eine Abtriebswelle mit dem ersten Rad verbunden ist.

10. Harmonisches Pinring-Getriebe nach Anspruch 8, wobei eine Abtriebswelle mit dem zweiten Rad verbunden ist.

11. Harmonisches Pinring-Getriebe nach Anspruch 8, wobei eine Abtriebswelle mit dem Pinring verbunden ist.

12. Innenrad für ein harmonisches Pinring-Getriebe mit einer Außenverzahnung, wobei die Zahnoberfläche der Außenverzahnung durch einen radialen Abstand von einer Mittelachse des Innenrads in Abhängigkeit von einem Zykelwinkel bestimmt ist, wobei der radiale Abstand von der Mittelachse seinerseits durch eine innere Äquidistante zu einer Radkurve bestimmt ist, wobei ein Ort auf der Radkurve jeweils durch die Vektorsumme eines Zykelvektors, eines ersten Epizykelvektors und eines zweiten Epizykelvektors bestimmt ist, wobei ein Anfangspunkt des Zykelvektors auf der Mittelachse liegt, ein Anfangspunkt des ersten Epizykelvektors im Endpunkt des Zykelvektors liegt und ein Anfangspunkt des zweiten Epizykelvektors im Endpunkt des ersten Epizykelvektors liegt,
und wobei ein Epizykelwinkel des ersten Epizykelvektors n - 1 mal so groß ist wie der Zykelwinkel und ein Epizykelwinkel des zweiten Epizykelvektors n - 3 mal so groß ist wie der Zykelwinkel, wobei n eine Anzahl von Pins des harmonischen Pinring-Getriebes ist, die mindestens vier ist, wobei der erste Epizykelwinkel in derselben Richtung wie der Zykelwinkel gemessen wird und der zweite Epizykelwinkel in einer entgegengesetzten Richtung zu dem Zykelwinkel gemessen wird, und wobei eine Länge des Zykelvektors größer ist als die Summe der Längen des ersten Epizykelvektors und des zweiten Epizykelvektors, und eine Länge des ersten Epizykelvektors größer ist als eine Länge des zweiten Epizykelvektors.

13. Außenrad für ein harmonisches Pinring-Getriebe mit einer Innenverzahnung, wobei Orte auf der Zahnoberfläche der Innenverzahnung jeweils durch einen radialen Abstand von einer Mittelachse des Außenrads in Abhängigkeit von einem Zykelwinkel bestimmt sind,
wobei der radiale Abstand seinerseits durch eine äußere Äquidistante zu einer Radkurve definiert ist, wobei Orte auf der Radkurve jeweils durch die Vektorsumme eines Zykelvektors, eines ersten Epizykelvektors und eines zweiten Epizykelvektors bestimmt ist, wobei ein Anfangspunkt des Zykelvektors auf der Mittelachse liegt, ein Anfangspunkt des ersten Epizykelvektors im Endpunkt des Zykelvektors liegt und ein Anfangspunkt des zweiten Epizykelvektors im Endpunkt des ersten Epizykelvektors liegt,
und wobei ein Epizykelwinkel des ersten Epizykelvektors (n + 1)-mal so groß ist wie der Zykelwinkel und ein Epizykelwinkel des zweiten Epizykelvektors (n + 3)-mal so groß ist wie der Zykelwinkel, wobei n eine Anzahl von Pins des harmonischen Pinring-Getriebes ist, die mindestens vier ist, wobei der erste Epizykelwinkel in einer entgegengesetzten Richtung zu dem Zykelwinkel gemessen wird und der zweite Epizykelwinkel in derselben Richtung wie der Zykelwinkel gemessen wird, und wobei eine Länge des Zykelvektors größer als die Summe der Längen des ersten Epizykelvektors und des zweiten Epizykelvektors ist, und eine Länge des ersten Epizykelvektors größer als eine Länge des zweiten
Epizykelvektors ist.

14. Harmonisches Pinring Getriebe, das aufweist
- ein Innenrad gemäß Anspruch 12 und
- ein Außenrad gemäß Anspruch 13,
- einen Pinring mit runden Eingriffsbereichen,
- einen umlaufenden Transmitter zum Rakeln der runden Eingriffsbereiche des Pin-Rings in die Innenverzahnung des Außenrads und in die Außenverzahnung des Innenrads, wobei das Innenrad, der Transmitter und das Außenrad konzentrisch zueinander angeordnet sind, der Transmitter radial innerhalb des Pinrings angeordnet ist, und wobei der Pinring zwischen dem Innenrad und dem Außenrad angeordnet ist.

15. Harmonisches Pinring Getriebe, das aufweist
- ein erstes Außenrad gemäß Anspruch 13 und
- ein zweites Außenrad gemäß Anspruch 13,
- einen Pinring mit runden Eingriffsbereichen,
- einen umlaufenden Transmitter zum Rakeln der runden Eingriffsbereiche des Pin-Rings in die Innenverzahnung des ersten Außenrads und in die Innenverzahnung des zweiten Außenrads,
wobei das der Transmitter, das erste Außenrad und das zweite Außenrad konzentrisch zueinander angeordnet sind, der Transmitter radial innerhalb des Pinrings angeordnet ist, und wobei der Pinring in axialer Richtung zwischen dem ersten Außenrad und dem zweiten Außenrad angeordnet ist.
